## Europäisches Patentamt
## European Patent Office
## Office européen des brevets

(19)

(11) Veröffentlichungsnummer: **0 112 501**
**B1**

(12) **EUROPÄISCHE PATENTSCHRIFT**

(45) Veröffentlichungstag der Patentschrift:
27.08.86

(51) Int. Cl.⁴: **B 29 C 67/20**, G 05 B 15/02

(21) Anmeldenummer: **83111751.0**

(22) Anmeldetag: **24.11.83**

(54) **Verfahren und Vorrichtung zur Sinterung insbesondere unterschiedlicher Formlinge aus insbesondere verschiedenartigen schäumbaren Kunststoffen.**

(30) Priorität: **25.11.82 DE 3243632**

(43) Veröffentlichungstag der Anmeldung:
**04.07.84 Patentblatt 84/27**

(45) Bekanntmachung des Hinweises auf die Patenterteilung:
**27.08.86 Patentblatt 86/35**

(84) Benannte Vertragsstaaten:
**AT CH FR GB IT LI NL**

(56) Entgegenhaltungen:
**DE - A - 2 643 759**
**DE - A - 2 820 802**
**DE - A - 2 940 815**

**SIEMENS-ENERGIETECHNIK, 4. Jahrgang 1982, 5/82 September/Oktober 1982, Berlin/München BODO KESSELHUT, HORST MATTHIESEN: "Fortschrittliches Automatisieren von Kunststoffverarbeitungsmaschinen mit dem Microcomputer S5-210A" Seiten 226-229**

(73) Patentinhaber: **Sodemape Holding AG, 122 Boulevard de la Petrusse, L-2330 Luxembourg (LU)**

(72) Erfinder: **Hahn, Ortwin, Prof.Dr.-Ing., Scherfeder Strasse 48, D-4790 Paderborn (DE)**

(74) Vertreter: **Hanewinkel, Lorenz, Dipl.-Phys., Patentanwalt Ferrariweg 17a, D-4790 Paderborn (DE)**

### Beschreibung

Die Erfindung betrifft eine Vorrichtung zur Sinterung insbesondere unterschiedlicher Formlinge aus schäumbarem Kunststoff in jeweils einem entsprechenden Formwerkzeug, das an einer steuerbaren Ver- und Entsorgungseinrichtung für Medien, wie schäumbaren Kunststoff, Dampf, Kühlwasser, Vakuum, Druckluft versorgungsmässig angeschlossen ist und an dessen Formwand mindestens ein Druck- und/oder Temperaturgeber angeordnet ist, der mit einer Steuervorrichtung eingangsseitig verbunden ist, die die gegebenen Druck- und/oder Temperaturwerte jeweils mit einem entsprechenden Vorgabewert vergleicht und abhängig von dem Vergleichsergebnis und von Zeitvorgaben entsprechende Steuersignale an die Ver- und Entsorgungseinrichtung gibt.

Eine Vorrichtung der genannten Art zum Betrieb jeweils eines Formwerkzeuges ist bekannt.

Weiterhin ist es bekannt, verschiedene Formen jeweils in eine Vorrichtung einzusetzen und so gleichzeitig unterschiedliche Formlinge herzustellen. Das schäumbare Material wird dabei aus einer zentralen Versorgungseinrichtung den Injektoren der Werkzeuge zugeführt, und die Zuführung der Heiz-, Sinter- und Kühlmedien, sowie des Druckmediums zum Öffnen und Schliessen der Form wird durch Zeitvorgaben mit aufgrund von Versuchen ermittelten Vorgabewerten von der Steuervorrichtung durch dementsprechendes Öffnen bzw. Schliessen von Ventilen der Versorgungseinrichtung gesteuert. Diese Betriebsweise ist für eine einzelne Form in DE-A-2 940 815 beschrieben.

Die Vergleichstemperaturen für das Heizen oder Kühlen der Formwand und der Druckwert zur Bestimmung der Sinterzeit sind dabei jeweils nur für ein bestimmtes Ausgangsmaterial zutreffend. Bei einem Übergang zu einem anderen Ausgangsmaterial, was in der Praxis verschiedentlich erforderlich ist, ist es zur Optimierung der Zeiten und des Energiebedarfs erforderlich, ausgehend von überlangen Zeiten schrittweise bei weiteren Arbeitszyklen eine Verkürzung bis auf Minimalzeiten, die mit einem ökonomisch sinnvollen Energieaufwand erreicht werden können, vorzunehmen, und zwar unter Wahrung von Verhältnissen, bei denen eine ausreichende Sinterung und eine ausreichende Abkühlung stattfindet. Diese Versuchsreihen erweisen sich als sehr aufwendig.

Weiterhin ergibt sich die Einschränkung, dass nur eine Art von Ausgangsmaterial gleichzeitig in den verschiedenen Formen verarbeitet werden kann, da die Steuerung der Zeiten nach Druckvergleich und Temperaturvergleich zwar die unterschiedliche Gestaltung der Formen, die gleichzeitig in der Vorrichtung eingesetzt sind, erfasst, aber nicht unterschiedliche Materialien berücksichtigt.

Es ist Aufgabe der Erfindung, eine Vorrichtung zu offenbaren, die es ermöglicht, insbesondere unterschiedliche Formlinge mit definierten und reproduzierbaren Formteileigenschaften aus verschiedenartigem schäumbaren Kunststoff vorzugsweise gleichzeitig zu sintern, wobei jeweils das Optimum bezüglich des Materialeinsatzes und für Heizen, Sintern und Kühlen bezüglich der Prozesszeit und des Energieeinsatzes, unter der Berücksichtigung der Erreichung definierter Produkteigenschaften angestrebt wird.

Die Lösung der Aufgabe besteht darin, dass die Steuervorrichtung einen Speicher enthält, in dem Materialdaten für den jeweils zu verarbeitenden Kunststoff und Formkennwerte für das jeweils eingesetzte Formwerkzeug gespeichert sind, aus denen die Steuervorrichtung die Vorgabewerte und/oder die Zeitvorgaben in absoluter Grösse und/oder die Vorgabewerte relativ zu dem zeitlichen Abstand der laufenden Messungen, z.B. als ein maximales bzw. minimales Druck- bzw. Temperaturdifferential, jeweils bestimmt.

Weitere vorteilhafte Ausgestaltungen der Vorrichtung und vorteilhafte Verfahren zu deren Betrieb sind in den Ansprüchen 2 bis 22 angegeben.

Die materialspezifischen Vorgabewerte werden vorteilhaft aus Materialdaten, wie der Erweichungstemperatur, dem Treibgasgehalt, der Schüttdichte, dem Molekulargewicht, der Rieselfähigkeit, der Perlgrösse sowie der relativen Feuchtigkeit bestimmt. Im einzelnen werden abhängig vom Materialzustand die Temperatur des Sinterdampfes und die Temperatur der Formwand zur Sinterung, der Schäumdruck, der Druckabbauvorgabewert, die Schliesstemperatur, die Spaltweiten, der Entformungsdruck und die Entformungstemperatur bestimmt und vorgegeben, damit eine intensive Sinterung und auch eine ausreichende Verfestigung vor der Entformung stattfindet und sich die Formlinge danach nicht verformen.

Da die Materialdaten in der Anlieferung erheblichen Toleranzschwankungen unterworfen sind und sich z.B. Feuchtigkeit und Treibgasgehalt abhängig vom Vorschäumen und Zwischenlagern und z.B. im Laufe eines Arbeitstages ändern, ist es eine vorteilhafte Weiterentwicklung, aus den gemessenen Temperatur- und Druckwerten während der Verarbeitung Kennwerte zu ermitteln, die zur laufenden Bestimmung der Vorgabewerte bzw. deren Korrektur dienen. Die Kennwerte und die neuen Vorgabewerte werden dabei zweckmässig mit vorgegebenen materialspezifischen Grenzwerten und/oder Mittelwerten verglichen und Überschreitungen bzw. Abweichungen an die Materialzufuhr als Alarm- oder Steuersignal weitergegeben. Es wird dadurch ermöglicht, die Toleranzen in den Materialeigenschaften als auch die Schwankungen der Zustände der anderen Versorgungsmedien und die unterschiedlichen Zustände der Form im Anfahr- und Dauerbetrieb durch die Betriebssteuerung auszugleichen, so dass Formlinge mit weitgehend gleichen Formteileigenschaften, die vorgegebenen Kennwerten mindestens entsprechen, also einer bestimmten Dichte, Festigkeit, maximalen Feuchtigkeit und Formgenauigkeit erzeugt werden, ohne dabei die Prozesszeit unnötig zu verlängern oder den Energieeinsatz extrem zu erhöhen oder extrem enge Toleranzen in den Daten der Ausgangsmaterialien zu fordern. Darüber hinaus ist eine Überwachung des Gesamtprozesses gegeben.

Die formspezifischen Zeitkonstanten werden vorteilhaft durch Eichprozessabläufe ohne Materialeinsatz und mit definiertem Standardmaterial oder mit Materialien mit Grenzeigenschaften bestimmt. Um dabei die Toleranzen und zeitlichen Veränderungen der Medienzustände eliminieren zu können, ist es zweckmässig, einerseits die Zustandsdaten der Medien vor Eintritt in das Formwerkzeug sowie nach Austritt aus dem Formwerkzeug und andererseits Druck und Temperatur im Formhohlraum bzw. der Formwand, die den Formhohlraum umgibt, zu messen und die entsprechenden Differenzen auszuwerten. Aus dem zeitlichen thermischen Verhalten der Formwand ergibt sich ein Formkennwert der in Verbindung mit den Materialkennwerten zu einer Bestimmung der Heiz- und Kühlzeiten führt.

Sind die Zustandssensoren nicht ein und ausgangsseitig direkt an dem Formwerkzeug angeordnet, sondern an den Versorgungsgeräten, also vor den Installationsleitungen, Ventilen usw., so geht jeweils in den Formkennwert ein zusätzlicher installationsspezifischer Anlagen- oder Maschinenkennwert ein. Dieser kann getrennt im Kurzschluss ohne Form ermittelt werden, wodurch der exakte Formkennwert bestimmt werden kann.

Aus den einmal bestimmten Formkennwerten und den laufend ermittelten Materialkennwerten erfolgt unter Zugrundelegung der für die Erreichung bestimmter Formteileigenschaften gespeicherten Prozessabläufe eine laufende Bestimmung der optimalen Betriebsparameter; es wird also eine Regelung vorgenommen, wobei als Optimierungskriterium einerseits die geforderten Formteileigenschaften als Grenzbedingungen und andererseits die Prozesszeit und der Energieverbrauch als Bemessungsgrundlage dienen.

Eine Weiterbildung der Vorrichtung besteht darin, dass mehrere getrennte Zuführungen von unterschiedlichen Materialien insbesondere verschiedener Schüttgewichte, verschiedener Erweichungstemperatur oder verschiedener Farben zugeordnet mit den gleichzeitig in der Vorrichtung befindlichen Formwerkzeugen verbunden sind und dementsprechend in dem Speicher der Steuervorrichtung die verschiedenen zugehörigen Materialdaten gespeichert sind, aus denen zugeordnet zu den Formwerkzeugen mit den jeweiligen Formkennwerten die Vorgabewerte bestimmt werden. Bei der Optimierung wird berücksichtigt, dass Material mit niedrigerer Erweichungstemperatur, das in einem einfacheren Prozess herzustellen ist, eine längere Kühlzeit oder höheren Energieeinsatz bei der Verarbeitung zum Formling erfordert.

Dieses Material wird deshalb bei der gleichzeitigen Herstellung unterschiedlicher Formlinge vorzugsweise für dünnwandige, relativ schnell erkaltende Formlinge verwendet.

Um eine weitere Steigerung der Genauigkeit der bestimmten Vorgabewerte zu erreichen, ist es vorteilhaft, an mehreren Stellen der Formwand Temperaturgeber und Druckgeber einzusetzen und auch in den Versorgungszu- und -ableitungen Temperatur- und Druckgeber anzuordnen.

Um den Aufwand hierfür gering zu halten, wird dafür zweckmässig die Verwendung von bekannten Gebern vorgesehen, die unmittelbar digitale Messdaten an ihren Leitungsanschlüssen liefern und vorzugsweise mit einem Abrufspeicher versehen sind, so dass alle Geber mit einem Zweileitersystem angesteuert und abgefragt werden können.

In einer weiteren vorteilhaften Ausgestaltung der Erfindung sind in der Versorgungsvorrichtung Durchflussmesser für die Medien angeordnet, so dass der Verbrauch an Dampf, Druckluft, Vakuum usw. fortlaufend gemessen wird und insbesondere bei den Eichprozessabläufen die spezifischen Medienverbräuche der Formen als Formkennwerte ermittelt werden, die als Basis für die Optimierung benutzt werden.

Weiterhin sind Messeinrichtungen zur Erfassung der Formteileigenschaften an den fertigen Formlingen vorhanden, deren Messdaten zur Rückmeldung und zum Vergleich mit den vorgegebenen Formteileigenschaften dienen, wobei aus dem Vergleichsergebnis eine Korrektur des Prozessablaufes gesteuert wird, sofern unzulässige Abweichungen auftreten, was eine Selbstoptimierung des Prozesses bewirkt.

Eine weitere vorteilhafte Ausgestaltung der Vorrichtung und des Verfahrens ist gegeben durch eine Blähvorrichtung, die jeweils unmittelbar vor den Injektoren angeordnet ist und jeweils so gesteuert wird, dass die Materialdaten wie Schüttgewicht und Feuchtigkeit den Erfordernissen des jeweils optimalen Sinterprozesses und den Formteileigenschaften laufend angepasst werden.

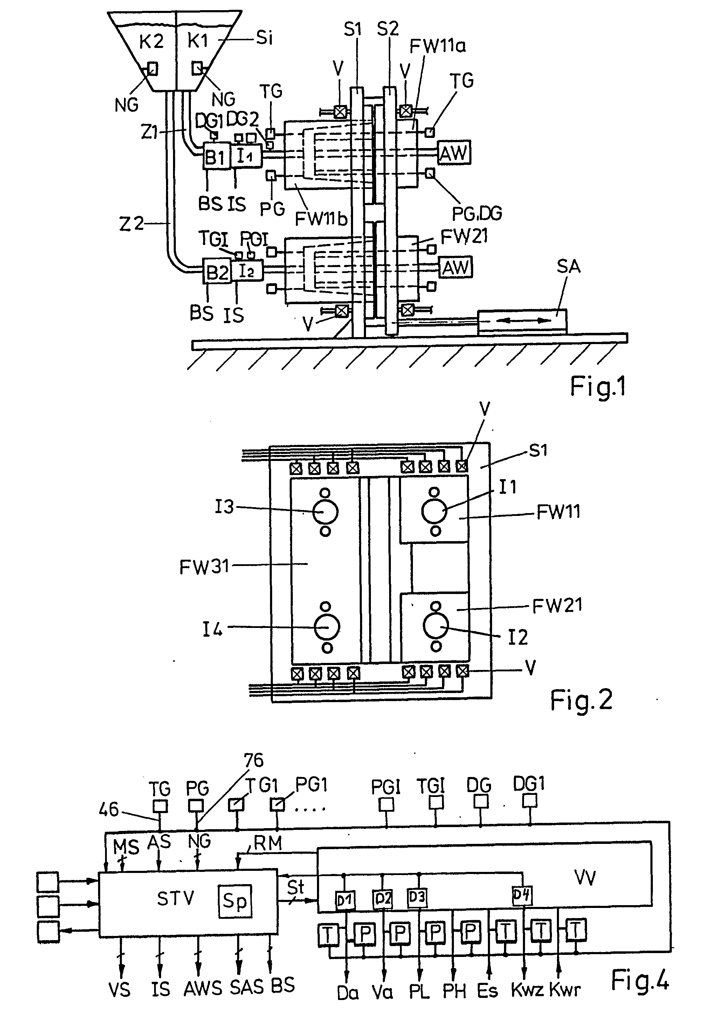

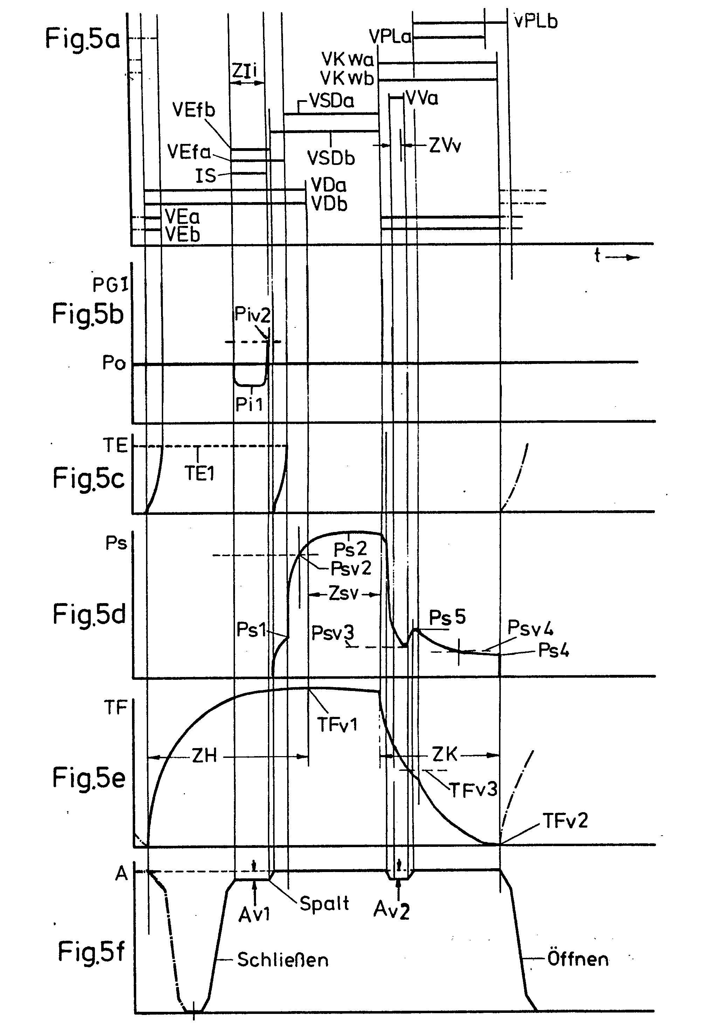

In den Fig. 1 bis 4 ist eine Vorrichtung dargestellt, die zur Durchführung des Verfahrens besonders geeignet ist, und in der Fig. 5 sind die zeitlichen Verläufe der Zustandsdaten und die Prozessschritte und Verknüpfungen der Messdaten und Prozessparameter gezeigt.

Die Steuervorrichtung kann für Prozessvarianten eingesetzt werden, wie die bekannte Dampfstoss-, Vakuum- und/oder Trockenschäumtechnik, d.h., für eine Prozessführung unabhängig von der hier beispielsweise gezeigten Werzeugausführung.

Fig. 1 zeigt eine Vorrichtung mit mehreren Formwerkzeugen mit getrennten Materialzuführungen in Seitenansicht

Fig. 2 zeigt die Vorrichtung in Frontansicht ohne die Materialzuführungen

Fig. 3 zeigt ein Formwerkzeug im Schnitt

Fig. 3a zeigt ein Detail

Fig. 4 zeigt die Steuervorrichtung und Versorgungsvorrichtung als Blockschaltung

Fig. 5a zeigt den zeitlichen Ablauf des Steuervorganges und zeitlich korreliert darunter den

b Druckverlauf im Injektor, die

c Kondensationstemperatur und den

d Schäumdruck, die

e Werkzeugtemperatur und den

f Öffnungs-/Schliessweg der Schilde.

In Fig. 1 ist eine Vorrichtung dargestellt zur gleichzeitigen Herstellung mehrerer Formlinge aus verschiedenartigem Kunststoff K1, K2. Das Silo Si ist in Kammern eingeteilt, die einzeln mit den Injektoren I1, I2 über Zuleitungen Z1, Z2 verbunden sind, die die Formwerkzeuge FW11, FW12 mit Sintermaterial versorgen. Die Formwerkzeuge FW11, FW12 bestehen jeweils aus zwei Formteilwerkzeugen FW11a, b, die in den Schilden S1, S2 jeweils gehaltert sind. Mit dem Schildantrieb SA kann der Schild S2 mit jeweils dem einen Formteilwerkzeug FW11a aufgefahren werden, so dass nach dem Sintern die Formlinge entnommen bzw. durch die Auswerfer Aw ausgestossen werden können. Zwischen den Silos Si und den Injektoren I1, I2 sind Blähvorrichtungen B1, B2 angeordnet.

Die Formwerkzeuge FW11, FW12 werden über prozessabhängig gesteuerte Ventile V, die in einer Gruppe für jedes Formteilwerkzeug vorgesehen sind, mit einer in Fig. 4 dargestellten Versorgungs- und Entsorgungsvorrichtung VV für Dampf, Da, Vakuum Va, Pressluft PL, Kühlwasser Kwz und die zugehörige Entsorgung Es, KWr verbunden.

Ausserdem tragen die Formwerkzeuge Temperaturgeber TG und Druckgeber PG, und in den Kammern des Silos Si sind Niveaugeber NG angeordnet, die das Vorhandensein von Rohmaterial K1, K2 anzeigen. Zwischen den Schilden S1, S2 bzw. an dem Schildantrieb SA ist weiterhin ein Abstandsgeber AS angeordnet. Alle Signalleitungen von diesen Gebern sind mit der Steuervorrichtung SIV (Fig. 4) eingangsseitig verbunden.

In Fig. 2 ist dargestellt, wie jeweils ein Formwerkzeug FW11, FW21, FW31 zu einer Ventilgruppe V räumlich zugeordnet ist. Das Schild S1 trägt jeweils oben und unten zwei Ventilgruppen V. Die Formteilwerkzeuge sind von verschiedener Grösse und austauschbar.

Im Gegensatz zu den in Fig. 1 dargestellten Formwerkzeugen FW11, FW21 erstreckt sich das Formwerkzeug FW31 über die ganze Höhe der Schilde. Dies ist nur beispielhaft dargestellt, da eine grosse Variabilität in der Anordnung gegeben ist. Für das einfache, schnelle Umrüsten sind lediglich die Anschlüsse normiert fest installiert. Auch die Injektoren I1 bis I4 und die Auswerfer Aw und die Temperatur- und Druckgeber TG, PG sind beim Umrüsten leicht montierbar, bzw. sofern im Werkzeug fest, leicht an die Steuerung anschliessbar.

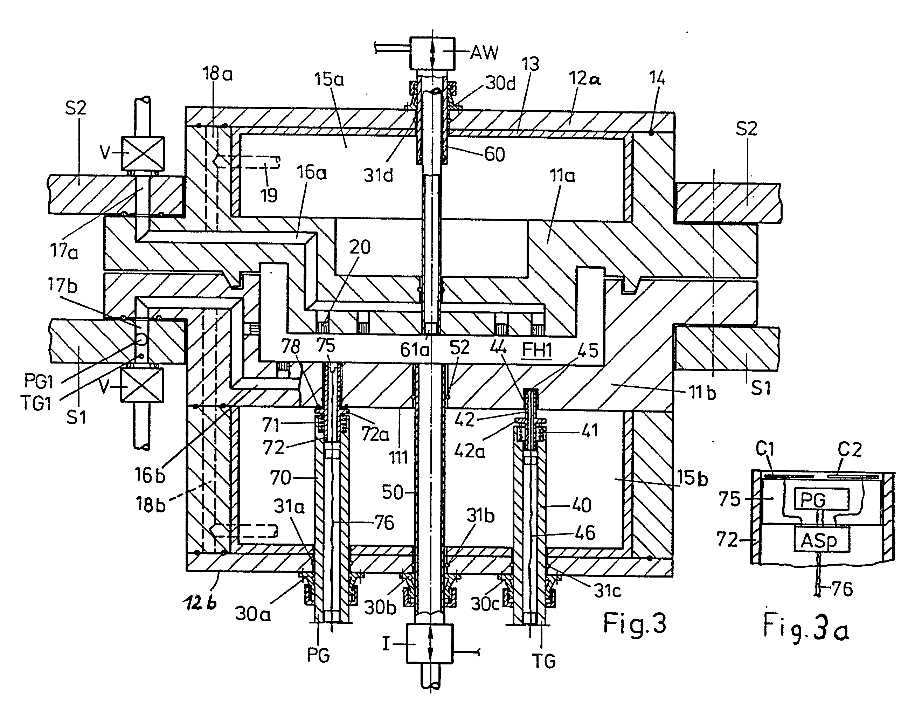

Dies ist aus der Schnittzeichnung eines Formwerkzeuges in Fig. 3 ersichtlich. In die Formwand 11b, die den Formhohlraum FH1 umschliesst, sind der Injektor I der Druckgeber PG und der Temperaturgeber TG durch die Medienkammer 15b hindurchragend von der Rückwand 12b her eingesetzt, wie auch der Auswerfer AW in die Formwand 11a von der Rückwand 12a her eingesetzt ist. Die Lage ist durch Klemmnippel 30a-d fixiert, und die Medien werden an den Durchführungen durch Dichtungen 31a-d, 52, 62, 78 abgesperrt. Bei ausreichender Länge der Schäfte 40, 50, 60, 70 der eingesetzten Baugruppen sind diese für verschiedenste Formwerkzeuge passend. Um Toleranzen in dem Teilwerkzeug insbesondere bei Temperatur- und Druckänderungen auszugleichen sind in vorteilhafter Weise der Druck- und Temperaturgeber PG, TG mit einem federelastischen Längenausgleich versehen. Das Druck- bzw. Temperaturgeberelement 75, 45 ist in der Spitze eines Trägers 72, 42 befestigt, der sich mit einem Krageneinsatz 72a, 42a an einer Druckfeder 71, 41 gegen den Schaft 70, 40 abstützt. Das Temperaturgeberelement 45 ragt in eine Bohrung 44 in der Formwand 11b, und das Druckgeberelement 75 ist durch eine Bohrung bündig mit der inneren Formwand an den Formhohlraum FH1 geführt. Der Kragenansatz 72a stützt sich an der kammerseitigen Fläche 111 der Formwand 11b ab. Die Signalleitungen 76, 46 der Geber sind durch Innenbohrungen in dem Träger 72, 42 und dem Schaft 70, 40 herausgeführt und mit der Steuervorrichtung verbunden.

Von den Ventilen V auf den Schilden S1, S2 sind jeweils in den Formwänden 11a, b Medienkanäle 16a, b zu den Düsen 20 zum Formhohlraum FH1 geführt. Weitere Ventile V sind in bekannter Weise über Bohrungen 18a, b mit Dampfverteilern 19, Kühlwasserverteilern und Entsorgungsanschlüssen Es für Kondensat oder Kühlwasser Kwr in den Kammern 15a, b jeweils verbunden. Da die verschiedenen Bohrungen, Ventile und Verteiler räumlich hintereinander liegen, sind sie im einzelnen nicht sichtbar in der Zeichnung.

Im einzelnen sind folgende Verknüpfungen von der Versorgungs- und Entsorgungsvorrichtung VV vorhanden:

— Die Leitungen von Dampf Da zum Sintern, Druckluft PL, Vakuum Va und die Entsorgung Es von Kondensat sind jeweils getrennt gesteuert mit den Medienkanälen 16a, b verbunden.

— Die Leitungen für Dampf Da zum Heizen, die Kühlwasserzuleitung Kwz, die Entsorgung Es von Kondensat und Rückleitung von Kühlwasser Kwr sind jeweils getrennt gesteuert über Ventile mit den entsprechenden Einrichtungen für die Verteilung bzw. Sammlung in den Kammern 15a, b verbunden.

— Die Leitungen für das Füllen des Formhohlraumes FH1 sind jeweils getrennt gesteuert mit den Leitungen für Sinterdampf, Vakuum und Pressluft an den Medienkanälen verbunden.

Der Dampf zum Sintern und Heizen kann über ein Reduzierventil unterschiedlich vorgegeben werden, soweit dies zweckmässig ist (nicht dargestellt).

Die Entsorgung Es nimmt das Kondensat des Heiz- und Sinterdampfes und das Kühlwasser auf, solange die Formwand noch auf relativ hoher Temperatur ist. Ist kaltes Kühlwasser im Rücklauf, wird es in den Kühlwasserrücklauf Kwr geführt, wodurch Energie- und Wasseraufbereitungskosten eingespart werden (In Fig. 5 nicht enthalten).

In Fig. 4 ist die Steuervorrichtung STV schematisch dargestellt, die ausgangsseitig über Signalleitungen VS, IS, AWS, SAS die verschiedenen Ventile V, die Injektoren I, die Auswerfer AW und den Schildantrieb SAS steuert. Ausserdem werden über die Steuerleitungen St die Aggregate der Versorgungsvorrichtung VV über Leitung RM an die Steuervorrichtung STV rückgemeldet.

Weiterhin sind an der Versorgungsvorrichtung VV, Durchflussmesser D, Druckgeber P und Temperaturgeber T an den Medienausgängen angeordnet, die zusammen mit den Druck- und Temperaturgebern PG, TG zum Eingang der Steuervorrichtung STV geführt sind. Zusätzlich sind zweckmässig, Temperatur- und/oder Druckgeber TG1, PG1, TGI, PGI an den Zu- bzw. Abführungen 17a, b, 18a, b usw. der Medienkanäle bzw. Kammern angeordnet, wovon aus Gründen der Übersichtlichkeit in Fig. 3 nur ein Paar dargestellt ist.

Auf diese Weise ist die Voraussetzung für eine Überwachung der Funktion und eine quantitative Ermittlung der Zeitkonstanten der Abschnitte des Gesamtsystems gegeben. Es werden jeweils die Verbindungsleitungen zwischen der Versorgungsvorrichtung und den Eingängen der Kammern, die Kammern am jeweiligen Ein- und Ausgang und die Entsorgungsleitung an der Kammer und der Entsorgungsvorrichtung überwacht, zusätzlich wird von dem Temperaturgeber in der Formwand über den Fluss der Wärme zwischen der Kammer und der Formwand eine Information geliefert.

Weiterhin werden die Versorgungsleitungen der Medienkanäle und die Wege durch die Medienkanäle zum Formhohlraum jeweils durch Ein- und Ausgangstemperatur- bzw. -druckmessung überwacht. In verschiedenen Fällen wird der Formhohlraum von einem Medienkanal zum anderen quer durchströmt. Dann sind jeweils zwei Abschnitte von der Versorgungsvorrichtung zum Formhohlraum und von dort zur Entsorgungsvorrichtung hintereinandergeschaltet und einzeln überwachbar.

In den Zeitabläufen in Fig. 5a - f sind für einen Steuerzyklus an einem Formwerkzeug in Zeitfolge charakteristische Schaltabläufe der Ventile und wichtige Druck- und Temperaturverläufe sowie der Öffnungs- bzw. Schliessweg A der Formteilwerkzeuge dargestellt.

In Fig. 5a sind als Balken jeweils die Schliesszeiten der Ventile V gezeigt. Die Indizes a, b bedeuten die Zuordnung zu dem Formteilwerkzeugen bzw. Formwänden 11a, 11b; die mittleren Buchstaben beziehen sich auf das gesteuerte Medium. Im einzelnen sind es: die Heizdampfkondensatentsorgungsventile VEa, b; die Heizdampfventile VDa, b; die Sinterdampfventile VSDa, b; die Injektorsteuerung IF; die an den Medienkanälen angeschlossenen Entsorgungsventile VEfa, b; das Vakuumventil VVa, das an den Medienkanal angeschlossen ist; die Kühlwasserventile VKwa, b; die Druckluftventile VPLa,b, die an die Medienkanäle angeschlossen sind.

Fig. 5b zeigt den Druckverlauf PGl im Injektor, der mit dem Druckaufnehmer PGl gemessen wird.

Fig. 5c zeigt den Temperaturverlauf TE, der an dem Entsorgungsanschluss hinter den Ventilen VEa, b und VEfa, b gemessen wird.

Fig. 5d zeigt den Sinterdruckverlauf Ps im Formhohlraum, der von dem Druckgeber PG gemessen wird.

Fig. 5e zeigt den Temperaturverlauf TF in der Formwand, der mit dem Temperaturgeber TG gemessen wird.

Fig. 5f zeigt den Abstand A der Formteilwerkzeuge, der durch den Abstandsgeber mit Signal AS gemeldet wird.

Die überlappenden Anteile der vor- und nachlaufenden Zyklen sind jeweils strichpunktiert dargestellt. Bereits während des Öffnens des Formwerkzeuges beginnt der Aufheizvorgang durch das Einschalten der Heizdampfventile VDa, b. Der Temperaturverlauf an den Entsorgungsanschlüssen TE zeigt dabei an, wenn das Kondensat jeweils die vorgegebene Temperatur TE1 von etwa 100°C erreicht hat und kein Kondensat weiter anfällt. Abhängig davon werden die Entsorgungsventile für Kondensat VEa, b jeweils geschlossen.

Den Temperaturverlauf TF in einer Formwand zeigt dazu Fig. 5a. Der Temperaturverlauf in der zweiten Formwand ist ähnlich und deshalb nicht dargestellt. Bei der Durchführung von Vergleichen ist jeweils der höhere bzw. niedrigere der beiden Temperaturwerte geeignet zuwählen.

Nach dem Auswerfen des voher gesinterten Formlings wird die Form bis auf einen vorgegebenen Spalt Av1 geschlossen. Sobald dieser von dem Abstandsgeber AS gemeldet wird, wird der Injektor betätigt und die Entsorgung über die Medienkanäle mit dem Formhohlraum durch Ventile VEfa, b verbunden. Die Füllluft entweicht durch das System zur Entsorgung. Ein Füllen ohne Spalt ist ebenfalls möglich.

Nachdem im Injektor ein Druckanstieg auf einen vorgegebenen Wert Piv2 gemessen wird oder spätestens nach einer vorgegebenen Zeit Zli wird der Injektor abgeschaltet und die Form und der Injektor vollständig dicht geschlossen. Dann wird das Entsorgungsventil VEfb geschlossen und der Sinterdampf über Ventil VSDb dem Formhohlraum zugeführt und durch das Sintergut querströmend zur Entsorgung geleitet, wo Kondensat abgeleitet wird. Entspricht die Temperatur TE des Kondensats an dem Entsorgungsanschluss der vorgegebenen Temperatur TE1 von ca. 100°C, so wird das Entsorgungsventil VEfa geschlossen und auch von der zweiten Seite Sinterdampf über das Ventil VSDa aufgeschaltet.

Bei der Querdurchströmung des Sinterdampfes baut sich ein Druck auf, der mit beidseitiger Bedampfung auf den vollen Dampfdruck ansteigt. Die Höhe dieser Druckwerte wird mit den Werten an den Versorgungseinrichtungen fortlaufend verglichen und bei zu langsamem oder ungenügendem Druckaufbau infolge der Expansion des im Dampfstrom erwärmten Materials eine Alarmmeldung abgegeben.

Der Schäum- bzw. Sintervorgang kann anhand des Druckverlaufes Ps überwacht werden. Es baut sich unmittelbar nach Schliessen der Form ein Expansionsdruck auf, der bei völligem Schliessen der Entsorgungsventile auf etwa zwei Atmosphären bis zum Schäumdruck Ps2 ansteigt. Für die Qualität des Formlings ist es von entscheidender Bedeutung, dass der Druck Ps2 für eine vorgegebene Sinterzeit Zsv über einem vorgegebenen Sinterdruck Psv2 liegt, wobei gleichzeitig die Formwandtemperaturen TFa und TFb über einem vorgegebenen Wert TFv1 liegen müsen. Sobald dieser vorgegebene Temperaturwert in den Formwänden jeweils erreicht ist, wird der Heizdampf jeweils abgeschaltet. Die beiden Werkzeughälften können auch nach dem spätesten Erreichen der Temperatur gesteuert werden.

Ist der Sintervorgang nach Ablauf der vorgegebenen Zeit Zsv abgeschlossen, so wird der Sinterdampf abgeschaltet und die Kühlung über die Ventile VKwa, b angeschaltet, wobei gleichzeitig die Entsorgung geöffnet wird. Nun muss der Druck Ps in dem Formling möglichst so schnell unter einen vorgegebenen Entformungsdruck Psv4 abgebaut werden, wie das Abkühlen der Formwand auf die vorgegebene Entformungstemperatur TFv2, die unter der Erweichungstemperatur des Materials liegen muss, dauert. Sobald die genannten vorgegebenen Werte unterschritten bzw. erreicht sind, wird die Kühlung abgeschaltet und die Form geöffnet.

Um den Druckaufbau zu beschleunigen, ohne dass sich der noch weiche und mit Treibgas gefüllte Sinterkuchen unzulässig verformt, wird der Spalt auf einen vorgegebenen Wert Av2 geöffnet und dann Vakuum durch Öffnen des Ventils VVa dem Formhohlraum für eine Mindestzeit ZVv zur Kondensatbeseitigung zuɉeführt.

Die Form wird wieder geschlossen, wenn eine vorgegebene Temperatur TFv3, die über der Erweichungstemperatur liegt, erreicht ist.

Das Vakuum bleibt über die vorgegebene Mindestzeit ZVv so lange eingeschaltet, um den Druckabbau und die Kühlung zu beschleunigen, bis ein vorgegebener Druck Psv3 erreicht ist. Dies kann auch über den Zeitpunkt des Schliessens der Form hinaus sein. Danach erfolgt im Bedarfsfall die weitere zusätzliche Kühlung und Trocknung des Formlings mit Druckluft durch Öffnung der Ventile VPLa, b mit so geringem Druck von ca. 1.2 bis 1.4 bar, dass der Formling nicht zusammengedrückt wird. Das Ventil VPlb bleibt noch während des Öffnens der Form zur Unterstützung des Auswerfens geöffnet, wobei der Druck auf mehrere Atmosphären erhöht werden kann. Hat sich der Formling gelöst, so fällt der Druck ab, worauf die Druckluft abgeschaltet wird.

Da die Druckluft und insbesondere das Vakuum relativ teure Medien sind, wird deren Einsatz so kurz wie möglich gehalten und die Maximalzeit der Ventilöffnung überwacht und eine Alarmmeldung abgegeben, sofern zu den vorgegebenen Grenzzeiten die vorgegebenen Drücke Psv2, Psv4 oder Temperaturen TFv2, TFv3 nicht erreicht werden.

Insbesondere wird die Kombination der druckluftunterstützten Abkühlung des Formlings und des Formverschlusses, des vakuumunterstützten Druckabbaus und des spaltunterstützten Druckabbaus in solchen Fällen eingesetzt, bei denen es auf kurze Zykluszeiten ankommt. Jeder Prozessschritt ist für sich allein bereits vorteilhaft und verkürzt die Abkühlphase und Druckabbauphase und damit die Gesamtzykluszeit.

Aus dem Druckanstieg nach dem Schliessen der Form auf den Wert Ps5 wird der Gehalt des Sinterkuchens an Resttreibgas bestimmt. Hieraus ergibt sich bei vorgegebener Messgenauigkeit und Oberflächenbeschaffenheit des Formteiles die notwendige Absenkung der vorzugebenden Entformungstemperatur TFv2 unter der Erweichungstemperatur.

Die Gesamtheit des Zyklus ist minimal, wenn die Summe aus der Heizzeit ZH, Sinterzeit Zsv und Kühlzeit ZK minimal ist und dabei das Öffnen und Schliessen der Form, das Füllen und der Druckaufbau bis zum vorgegebenen Sinterdruck höchstens der Heizzeit ZH zum Aufheizen der Formwand auf die vorgegebene Sintertemperatur TFv1 entspricht und weiterhin der Druckabbau auf den vorgegebenen Entformungsdruck Psv4 höchstens der Abkühlzeit ZK der Formwand auf die vorgegebene Entformungstemperatur TFv2 entspricht.

Der vorgegebene Sinterdruck Psv2, die Spaltweite Av1 und die Entformungstemperatur TFv2 ergeben sich aus Materialeigenschaften des Sintermaterials und den geforderten Formteileigenschaften. Ob und wie schnell der Sinterdruck Ps2 erreicht wird, hängt von der Formwandtemperatur TF, dem Treibgasgehalt, dem Füllgrad, der form- und materialspezifischen Zeit zur Verdrängung der Luft aus dem Zwikkelvolumen und dem Sinterdampfdruck PD1 ab. Die Heizzeit ZH bis zum Erreichen einer Formwandtemperatur TFv1 ist abhängig von der thermischen Zeitkonstanten des Zuleitungssystems und der der Form sowie der Differenz der Temperatur des Heizdampfes und der zu erreichenden Formwandtemperatur TFv1.

Zu dem dargestellten Fall kann durch eine geringe Erhöhung der Heizdampftemperatur die Heizzeit ZH noch soweit verkürzt werden, dass ihr Ende mit dem Erreichen des vorgegebenen Sinterdrucks Psv2 übereinstimmt.

Ist hingegen der Treibgasgehalt des Materials geringer, so steigt der Druck langsamer an und die genannten Zeitpunkte liegen enger zusammen. Ist der Druckaufbau aber sehr langsam, da nur sehr wenig Treibgas im Material enthalten ist, so müssen die vorgegebenen Formwandtemperaturen und die Heizdampftemperatur heraufgesetzt werden. Dadurch erhöht sich der Energieeinsatz für Heizen und Kühlen, und sowohl die Heizzeit ZH als auch die Kühlzeit ZK verlängern sich.

Die Sinterzeit Zsv ist ebenfalls von Materialeigenschaften abhängig und wird durch den tatsächlichen Sinterdruck Ps2 mitbestimmt. Bei einem hohen Gehalt an Treibgas wird die Sinterzeit verkürzt.

Ist der Treibgasgehalt relativ gering, ist die Erweichungstemperatur höher und der Druckaufbau langsamer. Die Heiz- und Sinterzeit bzw. -temperatur und der Sinterdampfdruck müssen dementsprechend erhöht vorgegeben werden; andererseits fällt der Druck beim Kühlen schneller ab und die Entformung kann bei einer höher vorgegebenen Temperatur und somit nach einer kürzeren Kühlzeit erfolgen.

Für die Gesamtwirtschaftlichkeit ist ausser dem Energieeinsatz und der Prozesszeit wesentlich, dass Material mit niedrigerem Molekulargewicht, das einfacher herstellbar ist, bei Teilen mit niedrigen Anforderungen an die Formteileigenschaften gleichzeitig mit Material mit anderen Eigenschaften in der Vorrichtung verarbeitet werden kann.

Da häufig Sätze von Verpackungsteilen hergestellt werden, von deren Teilen verschiedene Formteileigenschaften gefordert werden, und da andererseits die Formgeometrie der verschiedenen Formen jeweils eine unterschiedliche Zykluszeit ergeben, kann das Material mit niedrigem Molekulargewicht bzw. Erweichungstemperatur in den Formen mit kurzen Zykluszeiten verwandt werden und gleichzeitig in den Formen mit langen Zykluszeiten das hochwertige Material eingesetzt werden. Die Optimierung der Zeiten erfolgt dann für die ungünstigste Kombination von Material und Form. Die Zykluszeit, die somit für alle parallel ablaufenden Prozesse in den anderen Formen vorgegeben ist, wird dann optimal auf Heiz-, Sinter- und Kühlzeit aufgeteilt.

Eine weitere wesentliche Materialkenngrösse ist die Schüttdichte. Diese wird durch das Vorschäumen bestimmt und ist für die Dichte des Endproduktes massgebend. Bereits stark vorgeblähtes Material benötigt einen höheren Druck zum Sintern. Andererseits ist der Druckabbau beim Kühlen schneller.

Aus dem Zusammenhang zwischen der Schüttdichte des vorgeblähten Materials und der vorgegebenen Spaltweite im Verhältnis zur Dicke des Formteils, das heisst der relativen Kompression nach dem Füllen, ergibt sich die Dichte und Festigkeit des Fertigteils. Findet eine hohe Kompression statt, entsteht ein dichterer und festerer Formling; aber der Druckabbau nach dem Sinterprozess findet langsamer statt.

Weiterhin ist die Perlgrösse der vorgeschäumten Partikel wesentlich für die Oberflächengüte und die Festigkeit des Formlings.

Die Rieselfähigkeit des vorgeblähten Materials ist durch den Feuchtigkeitsgehalt und elektrostatische Aufladungen bestimmt. Bei schlechter Rieselfähigkeit kann eine ungleichmässige Füllung der Form und damit Loch- und Lunkerbildung auftreten. Weiterhin kann die Füllzeit sich scheinbar verkürzen, da durch Verklumpung und Verstopfung in der Form ein Druckanstieg entsteht, der eine gute Füllung vortäuscht. Eine Überwachung der Füllzeit dient zur Anzeige dieses Mangels. Eine Korrektur des Einflusses geringer Rieselfähigkeit ist in gewissen Grenzen durch Vergrösserung der Spaltweite während des Füllvorganges möglich. Für eine durchgreifende Abhilfe gegen Störungen dieser Art ist eine Einflussnahme auf den Blähprozess oder eine Nachbehandlung des geblähten Materials vorzunehmen.

Eine weitere wesentliche Materialeigenschaft ist der relative Feuchtigkeitsgehalt, da es Ziel ist, möglichst so trockene Formlinge herzustellen, dass für die jeweils vorgesehene Verwendung keine weitere Trocknung in einem nachgeschalteten Prozess vorgenommen werden muss. Die Feuchtigkeit des Formlings kann durch einen höheren Sinterdampfdruck verringert werden. Der Sinterdampfdruck wird nach unten begrenzt durch den Punkt, wo eine hinreichende Verschweissung der Partikel nicht mehr stattfindet und nach oben hin dort, wo eine Zerstörung des Schaumstoffs durch Überhitzung erfolgt.

Es sollte deshalb mit einem möglichst niedrigen Dampfdruck gearbeitet werden. Ebenso wird ein Abfallen der Feuchtigkeit durch höhere Werkzeugtemperatur erreicht.

Eine zusätzliche Verringerung der Feuchtigkeit des Formlings kann beim Kühlvorgang durch Vakuum und/oder Druckluft erfolgen; denn das oberflächlich anhaftende Wasser wird abgesaugt, weggeblasen, oder es kann abfliessen. Entsprechend steigender Feuchtigkeit der geschäumten Formteile ist der Sinterdampfdruck zu erhöhen oder die Sinterzeit Zsv zu verlängern und die Vorgabezeit für das Vakuum ZVv zu verlängern.

Die verschiedenen durch Herstellung und Aufbereitung bestimmten Materialdaten von mehreren Materialien, die verschiedenen Formkennwerte mehrerer Formen und unterschiedliche Formteilkennwerte von Formteileigenschaften, die von verschiedenen parallel zu fertigenden Teilen gefordert werden, bilden mit ihren Verknüpfungen für eine Optimierungsrechnung ein derart komplexes Problem mit einer sehr grossen Zahl Variablen, dass es zweckmässig ist, das Optimierungsproblem in einzelne Verfahrensschritte aufzuteilen, die mit einer eingeschränkten Zahl Variable durchgeführt werden. Als besonders vorteilhaft hat sich folgendes Verfahren erwiesen:

1.1. Bestimmung der Materialdaten der ungeschäumten Ausgangsmaterialien: Molekulargewicht, Treibgasgehalt, Erweichungstemperatur.

1.2. Vorgabe der spezifischen Medienkosten für: Dampf, Kühlung, Vakuum, Druckluft.

2. Bestimmung der Installationskennwerte: Druck- und Temperaturzeitkonstanten und der Betriebszeitkosten.

3. Bestimmung der Formkennwerte: Druck- und Temperaturzeitkonstanten, Mediendurchsätze, Betriebszeitkosten.

4. Vorgabe der Formteilkennwerte der Formlingqualität: Dichte, Festigkeit, Oberflächenbeschaffenheit, Feuchtigkeit, Dämpfung, Stossfestigkeit, Masshaltigkeit usw.

5.1. Auswahl der verwendbaren Ausgangsmaterialien bezüglich: Molekulargewicht und Treibgasgehalt gemäss den Festigkeits- und den Oberflächenbeschaffenheitsanforderungen für die verschiedenen Teile.

5.2. Auswahl aus nach 5.1. ermittelten Ausgangsmaterialien jeweils das preisgünstigste für jedes Teil.

6. Vorgabe der Schüttdichte der vorgeschäumten Materialien entsprechend der Dichteanforderung nach 4.

7. Vorschäumen der Materialien nach Vorgabe aus 6.

7.1. Bestimmung der Materialdaten der geschäumten Materialien: Schüttdichte, Feuchtigkeit, Rieselfähigkeit, Perlgrösse.

7.2. Prüfung und evtl. Korrektur, ob Vorgaben aus 6., 4. und 3. erreicht sind bzw. bis Vorgaben erreicht sind.

7.3. Bestimmung des Treibgasgehaltes, der Perlgrösse und Rieselfähigkeit.

8. Ermittlung vorläufiger Vorgabewerte von Druck, Temperatur, Sinterzeit, Trockenzeit für die Prozessabläufe für alle Teile unabhängig voneinander und zwar jeweils aus den Daten nach dem Molekulargewicht, der Erweichungstemperatur, den Daten nach 7.1., 7.3. und der nach 4. vorgegebenen Oberflächenbeschaffenheit und Feuchtigkeit.

8.1. Berechnung vorläufiger Zykluszeiten aus den Vorgabewerten nach 8. und den Kennwerten nach 2. und 3. ohne Kostenbetrachtung.

8.2. Ermittlung der längsten Zykluszeit.

8.3. Optimierung der längsten Zykluszeit unter Berücksichtigung der Kosten nach 2. und 3. durch Variation der Vorgabewerte nach 8. und Bestimmung der endgültigen Vorgabewerte und Vorgabezeiten.

8.4. Optimierung der Vorgabewerte der übrigen Teile durch Variation der entsprechenden Vorgabewerte nach 8. unter Berücksichtigung der Kosten nach 2. und 3., wobei die Zykluszeit, die nach 8.3. ermittelt ist, vorgegeben ist.

9. Durchführung des Sinterprozesses unter Vorgabe der Werte nach 8.3., 8.4. und Messung der Ist-Werte von Druck, Temperatur und den sich entsprechend den Vorgabewerten und Ist-Werten ergebenden Zeiten der Prozessschritte.

9.1. Vergleich der gemessenen Werte mit den entsprechend der Optimierungsrechnungen nach 8.3. und 8.4. erwarteten Werten und Vergleich der Abweichungen mit vorgegebenen oberen und unteren Grenzwerten.

9.2. Bei Über- und Unterschreitung von Grenzwerten nach 9.1.; Analyse aufgrund der Kombination von gleichzeitigen Fällen und/oder der Grösse der Abweichungen, ob eine Betriebsstörung bzw. in welchem Teil der Vorrichtung diese vorliegt und Ausgabe einer Alarmmeldung oder ob die Ist-Materialdaten insbesondere der Treibgasgehalt und/oder die Rieselfähigkeit von den Werten nach 7.3. abweichen und Ausgabe einer Meldung und

9.3. Wiederholung der Schritte ab 8.4. bzw. 8.3. mit den Ist-Materialwerten nach 9.2. bzw. Ist-Kennwerten, die sich aus den Ist-Messwerten nach 9. ergeben.

Bei entsprechend gestalteter Analyse werden Störungen sowohl in der Vorrichtung selbst als auch im Vorschäumprozess oder in der Materialversorgung und Zwischenlagerung getrennt erkannt und einzeln als Alarmmeldung ausgegeben.

Eine vorteilhafte Ausgestaltung der Vorrichtung und des Verfahrens besteht darin, dass entweder an den Formwerkzeugen selbst oder an einer der Schäumvorrichtung nachgeordneten Messvorrichtung die Formteileigenschaften z.B. Feuchtigkeit, Festigkeit, Oberflächengüte, Masshaltigkeit und Dichte gemessen werden und diese Messwerte MS der Steuervorrichtung STV zugeführt und mit den vorgegebenen Formteilkennwerten verglichen werden. Treten Überschreitungen der Grenzwerte in unzulässige Bereiche auf, so wird ein Alarmsignal ausgegeben; sind die Differenzen in einem zulässigen Toleranzbereich, so werden diese zur Regelung des Prozesses in die Bestimmung der Vorgabewerte so einbezogen, dass eine Verringerung der Toleranzen bewirkt wird.

Eine weitere vorteilhafte Ausgestaltung der Vorrichtung und des Verfahrens ist dadurch gegeben, dass das vorgeschäumte Material über die Blähvorrichtung B1, 2 den Injektoren I1, 2 zugeführt wird. Diese Blähvorrichtungen bestehen aus Kammern, die steuerbar mit Heissluft, Hochfrequenz oder Mikrowellen beaufschlagt sind, wodurch ein Trocknen, Erwärmen und/oder Blähen insbesondere vorgeschäumten Materials gezielt in diesen vorgenommen wird. Ist z.B. der Feuchtigkeitsgehalt des Formlings hoch, so wird das Material durch die Zuführung von trockener warmer Luft vorgetrocknet. Ist die Dichte und Festigkeit des Formlings höher als nötig, so wird in die Blähvorrichtung so viel Energie in Form von Hochfrequenz, Mikrowellen oder Heissluft eingeführt, dass ein Blähen auf die geforderte Dichte erreicht wird. Die Temperatur wird dabei von dem Temperaturgeber TGI überwacht, und die Vergrösserung der Teilchen bzw. Abnahme der Dichte des Materials wird einerseits während des folgenden Sinterprozesses aus dem Sinterdruck Ps2 und/oder aus der Füllzeit Zli bestimmt oder andererseits durch Dichtemessgeräte DG1, 2 mit denen der Teilchenstrom am Ein- bzw. Ausgang der Blähvorrichtung beobachtet wird, direkt gemessen.

Die genannten Messsignale TGI, Ps2, Zli, DG1, 2 werden zweckmässig der Steuervorrichtung STV zugeführt und von dieser ausgewertet, worauf diese entsprechend Steuersignale BS zur Steuerung der Blähvorrichtung B1, 2 abgibt.

Die Verwendung einer Blähvorrichtung in Verbindung mit einer Sintervorrichtung ist bereits für sich vorteilhaft. Die vorteilhafte Wirkung wird noch gesteigert durch das Zusammenwirken der Blähvorrichtung bzw. ihrer Steuerung mit der Mess- und Steuervorrichtung der nachgeschalteten Sintervorrichtung, wobei die gesamte Optimierungsstrategie des Verfahrens beide Vorrichtungen integriert ausnutzt.

Das dargestellte Verfahren zur Bestimmung der optimalen Vorgabewerte, das Optimierungsverfahren zur Verkürzung der Zykluszeit bei wirtschaftlichem Energieeinsatz durch Anpassung überlappender Prozessfunktionen an den gleichen Zeitrahmen, der durch die ungünstige Funktion vorgegeben ist, und die Vorrichtung zur Durchführung der Verfahren sind beispielhaft dargestellt und können entsprechend den speziellen Anforderungen variiert werden, ohne dass das Prinzip der Erfindung verlassen wird.

Für die Erfassung sämtlicher benötigter Messwerte in der Installation, der Versorgungsvorrichtung und in den Formwerkzeugen ist eine relativ hohe Anzahl von Messwertgebern für Druck, Temperatur, Feuchtigkeit, Abstand, Dichte usw. erforderlich. Zur Vereinfachung der Verkabelung und der Verarbeitung ist es zweckmässig, statt der üblichen Analogmesssignale liefernden Geber mit einem nachgeschalteten Messmultiplexer und Analogdigitalwandler, solche Geber zu verwenden, die unmittelbar digitale Messsignale abgeben, das heisst die auf der Basis von mit Zählern messbaren Frequenzen arbeiten, die durch Schwingungssysteme z.B. mit temperatur- oder druckabhängigen Komponenten, z.B. Quarzen, erzeugt werden.

Es wird ein Geber gemäss Fig. 3a eingesetzt, der aus einem Schwingkreis besteht, dessen Kapazitätsbelege C1, 2 auf der Formwand oder vorzugsweise räumlich integriert auf dem Druckgeber 75 auf dessen Oberfläche nebeneinander oder konzentrisch angeordnet sind, so dass der Formhohlraum, der Formling oder Sinterkuchen jeweils das Dielektrikum des Schwingkondensators bildet. Durch die Frequenz dieses Schwingkreises können somit folgende Messgrössen bzw. Zustände erfasst werden:

— Oberfläche der Form feucht bzw. trocken,
— Feuchtigkeitsgehalt des eingefüllten Materials,
— Erweichungs- bzw. Verfestigungszustand des Sinterkuchens,
— Feuchtigkeit und unter Umständen Dichte des Formlings.

Diese Zustandsmeldungen können alternativ oder ergänzend zu den Temperaturen bzw. Druckmesswerten zur Signalisierung oder Auslösung des Beginns der Sinterung, der Beendigung der Trocknung, der Beendigung der Kühlung und des Beginns der Entformung dienen. Weiterhin wird aus der Dichte und Feuchtigkeit des Endproduktes die Steuerung der Blähvorrichtung B1, 2 und der Sinterung wie bereits gezeigt vorgenommen.

Geber der kapazitiven Art sind auch als Dichte- und Feuchtigkeitsgeber DG1, 2 an der Blähvorrichtung B1 bzw. dem Injektor I1 vorgesehen. Die Kapazitätsbelege sind beidseitig der Zuführungsrohre angeordnet, so dass das Feld jeweils das durchlaufende Material durchsetzt. Es können auch Elektroden, die in der Blähvorrichtung zur Zuführung der Hochfrequenz dienen, als Messelektroden verwendet werden; das heisst der Hochfrequenzkreis dient selbst als Messkreis und seine Frequenz wird ausgewertet.

Diese Frequenzzähler werden zweckmässig mit den Schwingungssystemem in einer Baugruppe zusammengefasst und mit einem Abrufspeicher ausgestattet, der sobald er durch eine Adressierung mit einem zugehörigen seriellen Adresscode angesteuert wird, den Messwert als digitale Signalfolge abgibt, die von der Steuervorrichtung empfangen wird. Die Adressierung kann entweder über die Messleitung oder eine getrennte Adressierungsleitung erfolgen, wie aus der Datenübertragungstechnik bekannt ist. Sämtliche Geber oder Gruppen von Gebern sind an einem Ringleitungssystem angeschlossen, das von der Steuervorrichtung STV ausgeht. Jedem Geber ist eine eigene Adresse zugeordnet, die in ihm eingespeichert oder durch einen Codegeber an der Baugruppe eingangsseitig angeschlossen ist.

Ausser der Vereinfachung der Installation und der Steuervorrichtung ergibt sich der Vorteil, dass wegen der digitalen Übertragung keine Verfälschungen der Messsignale zwischen dem Messpunkt und dem Ort der Signalumsetzung stattfindet.

Die laufend ermittelten Messwerte werden von einem Prozessablaufprogramm in der Steuervorrichtung mit den vorgegebenen bzw. von dem Optimierungsprogramm nach den dargestellten Verfahren ermittelten Werten verglichen, und abhängig vom Vergleichsergebnis werden jeweils die Stellorgane z.B.: Ventile der Vorrichtung gesteuert.

**Patentansprüche**

1. Vorrichtung zur Sinterung insbesondere unterschiedlicher Formlinge aus schäumbarem Kunststoff in jeweils einem entsprechenden Formwerkzeug (FW11, FW21, FW31), das an einer steuerbaren Ver und Entsorgungseinrichtung (VV) für Medien, wie schäumbaren Kunststoff (K1, K2), Dampf (Da), Kühlwasser (Kw), Vakuum (Va), Druckluft (PL) versorgungsmässig angeschlossen ist und an dessen Formwand (11a, b) mindestens ein Druck (PG) und/ oder Temperaturgeber (TG) angeordnet ist, der mit einer Steuervorrichtung (STV) eingangsseitig verbunden ist, die die gegebenen Druck- (PS) und/oder Temperaturwerte (TF) jeweils mit einem entsprechenden Vorgabewert (Psv, TFv) vergleicht und abhängig von dem Vergleichsergebnis und von Zeitvorgaben (Zli, ZVv, Zsv) entsprechende Steuersignale (VS, IS, AWS, SAS, St) an die Ver- und Entsorgungseinrichtung (VV) gibt, dadurch gekennzeichnet, dass die Steuervorrichtung (STV) einen Speicher (Sp) enthält, in dem Materialdaten für den jeweils zu verarbeitenden Kunststoff (K1, K2) und Formkennwerte für das jeweils eingesetzte Formwerkzeug (FW11, FW21, FW31) gespeichert sind, aus denen die Steuervorrichtung (STV) die Vorgabewerte (Psv, TFv) und/oder die Zeitvorgaben (ZVv, Zsv) in absoluter Grösse und/oder die Vorgabewerte relativ zu dem zeitlichen Abstand der laufenden Messungen, z.B. als ein maximales bzw. minimales Druck- bzw. Temperaturdifferential, jeweils bestimmt.

2. Vorrichtung nach Anspruch 1, dadurch gekennzeichnet, dass die Formwerkzeuge (FW11, FW21) in einem Paar paralleler Schilde (S1, S2) austauschbar angeordnet sind und über die Schilde mit gleichartigen Ventilanordnungen (V) mit der Ver- und Entsorgungseinrichtung (VV) durch eine feste Installation jeweils verbunden sind und/oder der Temperaturgeber (TG), der Druckgeber (PG), ein Injektor (I), ein Auswerfer (AW) über eine feste Installation in den Schilden und/oder über eine flexible Installation vorzugsweise mit Klemmnippeln (30) leicht auswechselbar durch die Rückwände (12a, b) der Teilwerkzeuge in die Formwände (11a, b) vorzugsweise durch Federn (41, 71) kraftschlüssig auf Auflageflächen (78, 45) an den Formwänden (11a, b) eingesetzt sind und dass in dem Speicher (Sp) die Formkennwerte für Formwerkzeuge (FW11, FW21, FW31) selbst und die Installationskennwerte für die Ver- und Entsorgungseinrichtung (VV) in Verbindung mit der Installation bis zu den Ventilen (V) bzw. der Formwand (11a, b) sowie vorzugsweise den Formwerkzeugen (FW11, 21, 31) zugeordnet vorgegebene Formteilkennwerte gespeichert sind.

3. Vorrichtung nach Anspruch 1 oder Anspruch 2, dadurch gekennzeichnet, dass die Ver- und Entsorgungseinrichtung (VV) ein Silo (Si) enthält, das in mehrere Kammern geteilt ist, von denen getrennte Zuleitungen (Z1, Z2) vorzugsweise über Blähvorrichtungen (B1, B2) zu den Injektoren (I1, I2) der verschiedenen Formwerkzeuge (FW11, FW21) führen, und die Kammern verschiedene Kunststoffe (K1, K2) enthalten können und in dem Speicher (Sp) jeweils den Kunststoffen (K1, K2) zugeordnete ggf. verschiedene Materialdaten gespeichert sind.

4. Vorrichtung nach einem der vorherigen Ansprüche, dadurch gekennzeichnet, dass die Materialdaten Molekulargewicht, Erweichungstemperatur, Treibgasgehalt, Schüttdichte, Perlgrösse, Rieselfähigkeit und/oder relative Feuchtigkeit sind, dass die Formkennwerte Druck- und Temperaturzeitkonstanten und/oder spezifische Mediendurchsätze sind und dass die Installationskennwerte Druck- und Temperaturzeitkonstanten sind und dass die Formteilkennwerte: Festigkeit, Masshaltigkeit, Dichte, Oberflächenbeschaffenheit und/oder Feuchtigkeitgehalt sind.

5. Vorrichtung nach Anspruch 4, dadurch gekennzeichnet, dass an den Installationsanschlüssen an den Schilden (S1, S2) bzw. den Formwerkzeugen (FW11, FW21) und/oder an den Installationsanschlüssen an der Ver- und Entsorgungseinrichtung (VV), Druck-, Temperatur-, Dichte-, Feuchtigkeitsund/oder Niveaugeber (TG, PG, TG1, PG1, NG, DG) angeordnet sind, die mit der Steuervorrichtung eingangsseitig verbunden sind, und dass jeweils aus dem zeitlichen Verlauf der Differenz der Messwerte zwischen Eintritts- und Austrittsort eines Mediums durch das Formwerkzeug (FW) und/oder dem bzw. den Messwerten des in der Formwand (11a, b) angeordneten Druck-, Temperatur- bzw. Dichtegebers (PG, TG, DG) die zugeordneten Formkennwerte be

stimmt werden und/oder dass jeweils aus dem zeitlichen Verlauf der Differenz der Messwerte am Ausgang der Ver- und Entsorgungseinrichtung (VV) und am zugehörigen Anschluss der Installation an den Schilden (S1, S2) die jeweils zugehörigen Installationskennwerte bestimmt werden, wobei vorzugsweise der zeitliche Verlauf über einen Prozesszyklus unter Verwendung von standardisiertem Material und/oder ohne Materialeinsatz und/oder mit einem Kurzschluss zwischen zueinandergehörigen Ver- und Entsorgungsanschlüssen gemessen wird und dass mit Durchflussmessern (D1, D2) an der Ver- und Entsorgungsvorrichtung (VV) die spezifischen Medienverbräuche als Formkennwerte gemessen und in der Steuervorrichtung (STV) gespeichert werden.

6. Vorrichtung nach Anspruch 1 oder Anspruch 5, dadurch gekennzeichnet, dass die Temperaturgeber (T, TG, TG1, TGI) vorzugsweise quarzgesteuerte Frequenzgeber sind und/oder die Druckgeber (P, PG, PG1, PGI) vorzugsweise kristallgesteuerte Frequenzgeber sind und/oder die Dichtegeber (DG1) vorzugsweise schwingkreisgesteuerte Frequenzgeber sind, deren Schwingkreisfeld insbesondere kapazitiv mit den Material-, den Medienkanälen oder dem Formhohlraum (FH1) gekoppelt ist, und dass die genannten Geber vorzugsweise mit Frequenzzählern, die Abrufspeicher (ASp) bilden, jeweils eine Baugruppe bilden und dass vorzugsweise mehrere Baugruppen durch eine Abruf- und Messleitung (46, 76) mit der Steuervorrichtung (STV) verbunden sind und die Steuervorrichtung Abrufsignale mit einer Adresse auf die Abrufleitung sendet und der jeweils adressierte Abrufspeicher jeweils den gemessenen und gespeicherten Messwert auf die Messleitung sendet und die Steuervorrichtung den empfangenen Messwert verarbeitet.

7. Vorrichtung nach einem der vorherigen Ansprüche, dadurch gekennzeichnet, dass für die steuerbare Zuführung von den Medien zu den Formteilwerkzeugen eine Heizdampfleitung (Da), eine Kühlwasserzu- und -rückleitung (Kwz, r), eine Entsorgungsleitung (Es) über zugeordnete Ventile der Ventile (V) eine Kammer (15a,b) in den Formteilwerkzeugen (11a, b) angeschlossen ist und eine Sinterdampfleitung (Da), einer Druckluftleitung (PL) und eine Vakuumleitung (Va) über weitere zugeordnete Ventile der Ventile (V) mit einem Medienkanal (18a, b; 16a, b) und Düsen (20) mit dem Formhohlraum (FH1) verbunden sind.

8. Vorrichtung nach einem der vorherigen Ansprüche, dadurch gekennzeichnet, dass zwischen dem Silo (Si) für den schäumbaren Kunststoff (K1, 2) und den Injektoren (I1, 2) Blähvorrichtungen (B1, 2) angeordnet sind, in denen Wärme in Form von Hochfrequenz- oder Mikrowellenfeldern und/oder mittels Heissluft oder -gas dem Kunststoff steuerbar zugeführt wird, und dass vorzugsweise ein Temperaturgeber (TGI) und/oder ein Dichtegeber (DG1, 2) hinter und/oder vor der Blähvorrichtung angeordnet sind und dass die Messsignale der genannten Geber der Steuervorrichtung (STV) zugeführt werden und damit die Steuerung der Wärmezufuhr durch Steuersignale (BS) der Steuervorrichtung (STV) erfolgt.

9. Verfahren zur Herstellung von Formlingen aus schäumbarem Kunststoff unter Verwendung einer Vorrichtung nach einem der vorherigen Ansprüche, dadurch gekennzeichnet, dass aus dem Molekulargewicht, der Schüttdichte und dem Treibgasgehalt Mindestwerte für den Sinterdruck (Psv2) und/oder aus der Erweichungstemperatur die vorzugebende Formwandtemperatur (TFv1) zur Sinterung bestimmt werden und/oder aus diesen genannten Materialdaten und der geforderten Festigkeit, Masshaltigkeit und/oder Oberflächenbeschaffenheit die Formlinge die Vorgabezeit der Sinterung (Zsv) bestimmt wird und/oder aus der Schüttdichte und der geforderten Dichte des Formlings und dem zugehörigen Formkennwert die Spaltweite (Av1) bestimmt wird und/oder aus dem vorgegebenen Feuchtigkeitsgehalt des Formlings und dem Formkennwert der Trocknung die Vorgabezeit des Vakuums (ZVv) bestimmt wird und/oder aus der vorgegebenen Masshaltigkeit des Formlings und der Erweichungstemperatur die minimale Schliesstemperatur (TFv3) und/oder der maximale Entformungsdruck (Psv4) und/oder die maximale Entformungstemperatur (TFv2) bestimmt wird und/oder aus dem Treibgasgehalt oder dem Schäumdruck (Ps2) und dem zugehörigen Formkennwert der Druck (Psv3) zur Vakuumschaltung bestimmt wird.

10. Verfahren nach Anspruch 9, dadurch gekennzeichnet, dass einerseits aus den vorgegebenen Formwandtemperaturen (TFv1, TFv2) und dem Formkennwert für Heizung und andererseits aus der Öffnungs- und Schliesszeit der Form, der Injektionszeit (Zli) der Form und dem minimalen Sinterdruck (Psv2) mit dem Formkennwert des Druckabbaues die Heizzeit (ZH) bestimmt wird und/oder einerseits aus der Vorgabezeit des Vakuums (ZVv) und dem maximalen Entformungsdruck (Psv4) und dem Formkennwert für Druckabbau und andererseits aus den vorgegebenen Formwandtemperaturen (TFv1, TFv2) und dem Formkennwert für Kühlung die Kühlzeit (ZK) bestimmt wird und der vorgegebene Sinterdruck derart über dem minimalen Sinterdruck (Psv2) gewählt wird, dass dieser Druck zum gleichen Zeitpunkt erreicht wird an dem die Formwandtemperatur (TFv1) erreicht wird und/oder dass der Vorgabewert des Druckabbaues (Psv3) bzw. die Vorgabezeit des Vakuums (ZVv) bzw. der Kühlung durch Druckluft so gewählt werden, dass der Entformungsdruck (Psv4) zum gleichen Zeitpunkt erreicht wird wie die Entformungstemperatur (TFv2).

11. Verfahren nach Anspruch 9 oder Anspruch 10, dadurch gekennzeichnet, dass der Sinterdruck derart vorgegeben wird, dass die Summe aus den entsprechend gebildeten Zeiten (ZH, Zsv, ZK) ein Minimum ist.

12. Verfahren nach Anspruch 9 oder Anspruch 10, dadurch gekennzeichnet, dass der Sinterdruck und der vorzugebende Druck (Psv3) und die vorzugebende Temperatur (TFv3) bzw. die Zeit der Spaltöffnung und die Zeit der Vakuum- bzw. Druckluftkühlung derart gewählt werden, dass sich ein Minimum für die Summe aus den Material-, Medien- und Betriebsaufwendungen bezogen auf die Formlinge ergibt.

13. Verfahren nach einem der Ansprüche 9 bis 12, dadurch gekennzeichnet, dass aus dem zeitlichen Verlauf der Messwerte während des Prozesses insbesondere der Formwandtemperatur (TF), dem Sinterdruck (Ps), dem Injektordruck (PGI) und/oder dem Signal des Feuchte-, Dichtemessers (DG) die sich durch Steuerung entsprechend den Vorgabewerten ergebenden Zeiten für das Heizen, Kühlen, Sintern, Vakuumsaugen, Spaltöffnen bzw. Druckluftkühlen bestimmt werden und mit diesen Zeiten die Bestimmung neuer Vorgabewerte entsprechend dem Verfahren in den vorherigen Ansprüchen durchgeführt wird und/oder dass aus den gemessenen Zeiten exaktere Materialdaten bestimmt und gespeichert werden und als Ausgangsdaten für erneute Anwendung der Verfahrensschritte nach Anspruch 9 bis Anspruch 12 benutzt werden.

14. Verfahren nach einem der Ansprüche 9 bis 13, dadurch gekennzeichnet, dass aus dem Schäumdruck (Ps2) und/oder dem maximalen Druck (Ps5) nach Schliessen des Spaltes und Abschalten des Vakuums sowie dem Formteilkennwert für Masshaltigkeit und der Erweichungstemperatur die maximale Entformungstemperaturr (TFv2) bestimmt wird.

15. Verfahren nach einem der Ansprüche 9 bis 14, dadurch gekennzeichnet, dass die Verfahrensschritte nach vorhergehenden Ansprüchen für mehrere gleichzeitig in einer Vorrichtung betriebene insbesondere unterschiedliche Formwerkzeuge durchgeführt werden und die maximale Zykluszeit bestimmt wird und die Vorgabewerte für den Betrieb der Formwerkzeuge mit kürzeren ermittelten Zykluszeiten als der maximalen neu bestimmt werden unter Ausnutzung der ermittelten maximalen Zykluszeit und dass vorzugsweise die erneute Bestimmung der Vorgabewerte erfolgt unter zusätzlicher Variation der Materialien insbesonders bezüglich der Erweichungstemperatur, des Molekulargewichts und/ oder der Schüttdichte erfolgt.

16. Verfahren nach Anspruch 13, dadurch gekennzeichnet, dass die gemessenen Heiz-, Druckabbau- und Kühlzeiten (ZH, ZK) und ggf. die daraus bestimmten Materialdaten insbesondere der Treibgasgehalt, die Rieselfähigkeit und die Dichte mit vorgegebenen Grenzwerten verglichen werden und jeweils bei einer Über- bzw. Unterschreitung eine Alarmmeldung ausgegeben wird.

17. Verfahren nach einem der Ansprüche 9 bis 16, dadurch gekennzeichnet, dass zusätzlich zu den Formkennwerten die Installationskennwerte für die Bestimmung der Vorgabewerte und/oder der Materialdaten benutzt werden.

18. Verfahren nach einem der Ansprüche 9 bis 17, dadurch gekennzeichnet, dass dem schäumbaren Kunststoff (K1, K2) vor der Injektion in den Formhohlraum (FH1) Wärme durch Heissluft und/oder Hochfrequenz- oder Mikrowellenfelder derart in Dauer oder Intensität gesteuert oder geregelt zugeführt wird, dass eine Trocknung und/oder Blähung des Kunststoffes auf eine für den anschliessenden Sinterprozess optimal vorgegebene Feuchtigkeit und/oder Dichte erreicht wird.

19. Verfahren nach Anspruch 18, dadurch gekennzeichnet, dass die Feuchtigkeit bzw. Dichte derart optimal vorgegeben wird, dass die Summe des Aufwandes für Trocknen bzw. Blähen und den gesamten Sinterprozess minimal ist.

20. Verfahren nach Anspruch 18 oder Anspruch 19, dadurch gekennzeichnet, dass als Messgrösse für die Regelung der Sinterdruck (Ps2), die Dichte und/oder Perlgrösse des schäumbaren Materials, die Dichte des Sinterkuchens oder des Formlings und/oder Formteileigenschaften wie Feuchtigkeit und Oberflächenbeschaffenheit des Formlings dienen.

21. Vorrichtung nach einem der Ansprüche 1 bis 8 insbesondere zur Durchführung der Verfahren nach einem der Ansprüche 9 bis 20, dadurch gekennzeichnet, dass die Steuervorrichtung (STV) ein programmgesteuerter Rechner ist, in dessen Speicher (Sp) die Materialdaten, die Formkennwerte, die Formteilkennwerte, die Installationskennwerte, die Verknüpfungen und Abhängigkeiten dieser genannten Daten und Kennwerte, insbesondere wie in den Ansprüchen angegeben, untereinander und Optimierungsverfahren, insbesondere wie in den Ansprüchen genannt, in Form von Tabellen und/oder Programmen gespeichert sind und der Prozessablauf durch Steuerung der Stellorgane, z.B. Ventile, in der Vorrichtung abhängig von den jeweiligen Messwerten durch einen laufenden Vergleich mit den durch das Programm ermittelten Vorgabewerten oder -zeiten durch ein Prozessablaufprogramm gesteuert wird.

22. Verfahren nach Anspruch 9, dadurch gekennzeichnet, dass der Sinterdruck aus den Materialdaten und/oder Formkennwerten in Form eines minimalen Druckdifferentials und unter Berücksichtigung des zeitlichen Abstands der laufenden Messung bzw. einer Zeitkonstanten der Messwertverarbeitung bestimmt wird.

## Revendications

1. Dispositif pour fritter notamment des agglomérés différents en matière synthétique expansible dans un outil de formage (FW11, FW21, FW31) adéquat selon le cas, lequel outil de formage est raccordé, aux fins de distribution, à une installation d'alimentation et d'évacuation (VV) de médias, tels que matière synthétque expansible (K1, K2), vapeur (Da), eau de refroidissement (Kw), vacuum (Va), air comprimé (PL), pouvant être commandée; la paroi de formage (11a, b) de l'outil de formage (FW11, FW21, FW31) est pourvue d'au moins un capteur de pression (PG) et/ou de température (TG), relié, du côté entrée, à un dispositif de commande (STV) qui compare chaque valeur de pression (PS) et/ou de température (TF) donnée avec une valeur de référence allouée (PSv, TFv) correspondante et lance des signaux de commande (VS, IS, AWS, SAS, St) adéquats à destination de l'installation d'alimentation et d'évacuation (VV) en fonction du résultat de comparison et de temps alloués (Zli, ZVv, Zsv); dispositif caractérisé par le fait que le dispositif de commande (STV) contient une mémoire (Sp), dans laquelle des données de matières relatives à la matière synthétique (K1, K2) à travailler dans le cas en question et des données caractéristiques de moules relatives à l'outil de formage utilisé dans le cas en question (FW11, FW21, FW31) sont mémorisées, données sur la base desquelles le dispositif de commande (STV) détermine les valeurs allouées (Psv, TFv) et/ou l'établissement de temps (ZVv, Zsv) en grandeur absolue et/ou les valeurs allouées relativement par rapport à l'intervalle temporel des mesures courantes, par exemple en tant que différentiel maximum ou minimum de pression ou de température.

2. Dispositif selon spécification 1, caractérisé par le fait que les outils de formage (FW11, FW21) sont disposés interchangeablement, dans une paire de paliers (S1, S2) parallèles et reliés, chacun, par l'intermédiaire des paliers avec arrangements de soupapes (V), à l'installation d'alimentation et d'évacuation (VV) par installation fixe, et/ou que le capteur de température (TG), le capteur de pression (PG), un injecteur (I), un éjecteur (AW) sont mis en place dans les parois de formage (11a, b), de préférence à l'aide de ressorts (41, 71), entraînés par adhérence sur des surfaces d'appui (78, 45) sur les parois de formage (11a, b) par installation flexible, de préférence avec nipples de serrage (30), facilement interchangeables et en passant par les parois arrières (12a, b) des outils de formage; et caractérisé par le fait que des données caractéristiques de moule, relatives aux outils de formage (FW11, FW21, FW31) eux-mêmes et des données caractéristiques d'installation, relatives à l'installation d'alimentation et d'évacuation (VV) en relation avec l'installation jusqu'aux soupapes (V), respectivement: avec la paroi de formage (11a, b), ainsi que, de préférence, des données caractéristiques d'outils de moulage prédéterminées attribuées aux outils de formage (FW11, 21, 31), sont mémorisées dans la mémoire (Sp).

3. Dispositif selon spécification 1 ou spécification 2, caractérisé par le fait que l'installation d'alimentation d'évacuation (VV) comprend un silo (Si), divisé en plusieurs chambres, partant desquelles des conduites séparées (Z1, Z2) conduisent, de préférence en passant par des dispositifs de gonflement (B1, B2), aux injecteurs (I1, I2) des différents outils de formage (FW11, FW21, FW31), et què les chambres peuvent contenir des matières synthétiques (K1, K2) différentes, et que des données de matières attribuées aux matières synthétiques (K1, K2) ou, le cas échéant, des données de matières différentes, sont mémorisées dans la mémoire (Sp).

4. Dispositif selon l'une des spécifications précédentes, caractérisé par le fait que les données de matières sont: poids moléculaire, température d'amollissement, teneur en gaz de soufflage, densité de déchargement, grosseur de perles, faculté d'écoulement et/ou humidité relative, que les valeurs caractéristiques de moules sont: constantes de temps de pression et de température et/ou de débits de médias spécifiques, et que les valeurs caractéristiques d'installation sont: constantes de temps de pression et de température, et que les valeurs caractéristiques d'outils de formage sont: résistance, stabilité, étanchéité, constitution des surfaces et/ou d'humidité.

5. Dispositif selon spécification 4, caractérisé par le fait que des capteurs de pression, de température, de densité, d'humidité et/ou de niveaua (PG, TG, TG1, PG1, DG, NG) sont disposés aux raccords d'installation aux paliers (S1, S2), respectivement: aux outils de formage (FW11, FW21, FW31) et/ou aux raccords d'installation à l'installation d'alimentation et d'évacuation (VV), lesquels capteurs sont reliés, côté entrée, au dispositif de commande, et par le fait que les valeurs caractéristiques de moule correspondantes sont déterminées chacune en partant du déroulement temporel de la différence des valeurs mesurées entre lieu d'entrée et lieu de sortie d'un des médias traversant l'outil de formage (FW) et/ou en partant de la ou des valeur/s mesurée/s du capteur de pression, température ou de densité (PG, TG, DG), installé dans la paroi de formage (11a, b), et/ou caractérisé par le fait que les valeurs caractéristiques d'installation correspondantes sont déterminées en partant du déroulement temporel de la différence des valeurs mesurées à la sortie de l'installation d'alimentation et d'évacuation (VV) et au raccord correspondant de l'installation aux paliers (S1, S2), le déroulement temporel étant mesuré de préférence par l'intermédiaire d'un cycle de processus, avec recours à un matériel standardisé et/ou sans charge et/ou avec un court circuit entre les raccords d'alimentation et d'évacuation correspondants, et par le fait que les consommations spécifiques de médias sont mesurées en tant que valeurs caractéristiques de moule, à l'aide de débimètres (D1, D2) au dispositif d'alimentation et d'évacuation (VV), et enregistrées dans l'installation de commande (STV).

6. Dispositif selon spécification 1 ou spécification 5, caractérisé par le fait que les capteurs de température (T, TG, TG1, TGI) sont de préférence des capteurs de fréquences commandés par cristal déterminées que les capteurs de densité (DG1) sont de préférence des capteurs de fréquences commandés par circuit oscillant, le champ de ce dernier étant, notamment sur le plan capacitif, couplé avec les canaux de matière ou de médias ou le creux de moule (FH1), et que les capteurs cités forment de préférence les mémoires d'appel (ASp) avec des compteurs de fréquences, formant chacun un ensemble pièces et que, de préférence, plusieurs ensembles pièces se trouvent reliés au dispositif de commande (STV) à l'aide d'une ligne d'appel et de mesure (46, 76) et que le dispositif de commande lance des signaux d'appel avec une adresse sur la ligne d'appel, et que la mémoire d'appel adressée émet, chaque fois, sur la ligne de mesure, la valeur mesurée et mémorisée en question, et que le dispositif de commande traite la valeur mesurée reçue.

7. Dispositif selon l'une des spécifications précédentes, caractérisé par le fait que, pour l'amenée commandable des médias aux outils de formage, une conduite de vapeur de chauffage (Da), une conduite d'ammenée et de retour d'eau de refroidissement (Kwz, r), une conduite d'évacuation (Es) sont raccordées, per l'intermédiaire de soupapes attribuées des soupapes (V), une chambre (15a, b) est raccordée dans les outils de formage (11a, b) et une conduite de vapeur de frittage (Da), une conduite d'air comprimé (PL) et une conduite de vacuum (Va) sont raccordées, à l'aide d'autres soupapes correspondantes des soupapes (V) à un canal de médias (17a, b; 16a, b) et des buses (20) avec le creux de moule (FH1).

8. Dispositif selon l'une des spécifications précédentes, caractérisé par le fait que des dispositifs de gonflement (B1, 2) sont disposés entre le silo (Si) pour matière synthétique expansible (K1, 2) et les injecteurs (I1, 2), dispositifs de gonflement dans lesquels la chaleur est amenée à la matière synthétique sous forme de champs à haute fréquence ou micro-ondes et/ou à l'aide d'air chaud ou de gaz chaud, l'amenée étant dirigeable, et par le fait que, de préférence, un capteur de température (TGI) et/ou un capteur de densité (DG1, 2) sont disposés après ou avant le dispositif de gonflement et que les signaux de mesure des capteurs cités sont conduits au dispositif de commande (STV), la commande de l'amenée de chaleur se faisant ainsi à l'aide des signaux de commande (BS) du dispositif de commande (STV).

9. Procédé pour la fabrication d'agglomérés en matière synthétique expansible en utilisant un dispositif selon l'une des spécifications précédentes, caractérisé par le fait que des valeurs minimales sont déterminées pour la pression de frittage (Psv2) en partant du poids moléculaire, de la densité apparente et de la teneur en gaz de soufflement et/ou que la température des parois de formage à allouer (TFv1) pour le frittage est déterminée à partir de la température d'amollissement, et/ou le temps alloué du frittage (Zsv) est déterminé à partir de ces données de matériel citées et de la résistance, stabilité de dimensions exigées et/ou de la constitution des surfaces de l'aggloméré, et/ou que la largeur de l'interstice (Av1) est déterminée à partir de la densité apparente et de la densité d'aggloméré exigée et de la valeur caractéristique de moule correspondante, et/ou que le temps alloué du vacuum est déterminé à partir du degré d'humidité alloué et de la valeur caractéristique de moule du séchage et/ou que la température de fermeture minimale (TFv3) et/ou la pression de démoulage maximale (Psv4) sont déterminées à partir de la stabilité de dimensions allouée de l'aggloméré et de la température d'amollissement, et/ou que la pression pour l'arrêt du vacuum (Psv3) est déterminée à partir de la teneur en gaz de soufflement et/ou de la pression de moussage (Ps2) et de la valeur caractéristique de forme correspondante.

10. Procédé selon la spécification 9, caractérisé par le fait que le temps de chauffage (ZH) est déterminé, d'une part, à partir des températures de parois de formage allouées (TFv1, TFv2) et de la valeur caractéristique de forme pour chauffage et, d'autre part, à partir du temps d'ouverture et de fermeture, du moule et du temps d'injection (Zli) du moule et de la pression de frittage minimale (Psv2) avec la valeur caractéristique de suppression de pression, et/ou que le temps refroidissement (ZK) est déterminé, d'une part, à partir du temps alloué du vacuum (ZVv) et de la pression de démoulage maximale (Psv4) et de la valeur caractéristique de forme pour suppression de la pression et, d'autre part, à partir des températures de parois de formage allouées (TFv1, TFv2) et de la valeur caractéristique de forme pour refroidissement et que la pression de frittage alloué est choisie au-dessus de la pression de frittage minimale (Psv2) de sorte que cette pression se trouve atteinte au moment même où la température de parois de formage (TFv1) est atteinte, et/ou que la valeur allouée de suppression de pression (Psv3), respectivement: le temps alloué de vacuum (ZVv), respectivement: de refroidissement par air comprimé sont choisis de sorte que la pression de démoulage (Psv4) se trouve atteinte au moment même où la température de démoulage (TFv2) est atteinte.

11. Procédé selon spécification 9 ou spécification 10, caractérisé par le fait que la pression de frittage est établie de sorte que la somme résultant des temps formés adéquatement (ZH, Zsv, ZK) est un minimum.

12. Procédé selon spécification 9 ou spécification 10, caractérisé par le fait que la pression de frittage et la pression allouée (Psv3) et la température allouée (TFv3), respectivement: le temps d'ouverture de l'interstice et le temps de refroidissement vacuum ou air comprimé sont choisis de sorte qu'il en résulte un minimum pour la somme provenant du déploiement de matières, de médias et de service par rapport aux agglomérés.

13. Procédé selon l'une des spécifications de 9 à 12, caractérisé par le fait que les temps de chauffage, de refroidissement, d'aspiration de vacuum, d'ouverture d'interstice ou de refroidissement à courant d'air forcé résultant de la commande en fonction des valeurs allouées sont déterminés à partir du déroulement temporel des valeurs de mesure pendant le processus, tout particulièrement de la température des parois de formage (TF), de la pression de frittage (Ps), de la pression d'injecteur (PGI) et/ou du signal du dispositif de mesure d'humidité/densimètre (DG), et que la détermination de nouvelles valeurs allouées se fait à l'aide de ces temps, conformément au procédé, dans les spécifications précédentes, et/ou que des données de matériel plus exactes sont déterminées et mémorisées à partir des temps mesurés et sont utilisées en tant que données initiales pour un recours réitéré aux étapes du procédé selon spécifications 9 à 12.

14. Procédé selon l'une des spécifications de 9 à 13, caractérisé par le fait que la température de démoulage maximale (TFv2) est déterminée à partir de la pression de moussage (Ps2) et/ou de la pression maximale (Ps5) après fermeture de linterstice et interruption du vacuum, ainsi que de la valeur caractéristique de la pièce de moule quant à la stabilité de dimensions et la température d'amollissement.

15. Procédé selon l'une des spécifications de 9 à 14, caractérisé par le fait que étapes du procédé selon spécifications précédentes sont exécutées pour plusieurs outils de formage différents, simultanément en service dans un dispositif, et que le temps de cycle maximal est déterminé et que les valeurs allouées pour le service des outils de formage avec temps de cycle plus courts établis sont déterminés de nouveau par exploitation du temps de cycle maximal établi et que, de préférence, la nouvelle détermination des valeurs allouées a lieu en variant en plus les matières, notamment en ce qui concerne la température d'amollissement, le poids moléculaire et/ou de la densité.

16. Procédé selon spécification 13, caractérisé par le fait que les temps de chauffage, de suppression de pression et de refroidissement (ZH, ZK) mesurés et, le cas échéant, les données de matières déterminées en partant de là, notamment teneur en gaz de soufflement, faculté d'écoulement libre et densité sont comparés avec des valeurs limite allouées et que lors de chaque surpassement ou souspassement un avis d'alarme est lancé.

17. Procédé selon l'une des spécifications de 9 à 16, caractérisé par le fait qu'en plus des données de moule, les valeurs caractéristiques d'installation sont utilisées pour la détermination des valeurs allouées et/ou des données de matériel.

18. Procédé selon l'une des spécifications de 9 à 17, caractérisé par le fait que la chaleur est amenée à la matière synthétique expansible (K1, K2), avant l'injection, dans le creux de moule (FH1), par air chaud et/ou champs haute-fréquence ou micro-ondes, commandée ou réglée en durée ou en intensité de sorte qu'un séchage et/ou un gonflement de la matière synthétique à un degré d'humidité et/ou une densité optimal/optimale pour le frittage suivant soient obtenus.

19. Procédé selon spécification 18, caractérisé par le fait que l'humidité ou la densité sont si optimale que la somme du déploiement pour séchage ou gonflement et le processus de frittage est minimal.

20. Procédé selon spécification 18 ou spécification 19, caractérisé par le fait que la densité et/ou la grosseur de perles de la matière expansible, la densité du gâteau de frittage ou de l'aggloméré et/ou les propriétés des pièces de moule, telles que résistance et constitution des surfaces de l'aggloméré servent de grandeurs de mesure pour le réglage de la pression de frittage (Ps2).

21. Dispositif selon l'une des spécifications de 1 à 8, notamment pour l'exécution des procédés selon l'une des spécifications de 9 à 20, caractérisé par le fait que le dispositif de commande (STV) est calculateur commandé par programmes, dans la mémoire (Sp) duquel les données de matériel, les valeurs caractéristiques de moule, les valeurs caractéristiques de pièces de moule, les valeurs caractéristiques d'installation, les enchaînements et les dépendances de ces données et valeurs caractéristiques citées, notamment comme indiqués dans les spécifications, entre elles, et procédés d'optimisation, notamment comme cités dans les spécifications, sont mémoirisés sous forme de tableaux et/ou de programmmes et que le déroulement des opérations est dirigé par commande des organes de réglage, par exemple: soupapes, dans l'installation, en dépendance des valeurs de mesure en question, par une comparaison continuelle avec les valeurs ou les temps alloués, déterminés par le programme, à l'aide d'un programme de déroulement des opérations.

22. Procédé selon spécification 9, caractérisé par le fait que la pression de frittage est déterminée à partir des données de matériel et/ou des valeurs caractéristiques de moule, sous forme d'un différentiel de pression minimal et en tenant compte de l'intervalle temporel des mesures courantes ou d'une constante de temps du traitement des valeurs.

**Claims**

1. Apparatus for fusing especially different mouldings from foamable plastics in an appropriate form tool (FW11, FW21, FW31) that communicates with a controllable supply and removal device (VV) delivering media like foamable plastics (K1, K2), steam (Da), cold water (Kw), vacuum (Va) and compressed air (PL), and in the mold wall (11a, b) of the form tool at least one pressure transducer (PG) and/or temperature transducer (TG) is mounted and connected on its input side to controls (STV) that constantly compare the given pressure values (PS) and/or temperature values (TF) with an associated given value (Psv, TFv) and release appropriate control signals (VS, IS, AWS, SAS, St) to the supply device (VV) depending on the results of the comparison and on given time values (Zli, ZVv, Zsv), characterized in that the controls (STV) contain a memory (Sp) in which material data relating to different plastics (K1, K2) to be processed and mold parameters for each form tool (FW11, FW21, FW31) to be employed are stored and from which the controls (STV) determine the given values (Psv, TFv) and/or the given time values (ZVv, Zsv) as complete specified values and/or as relative to the timely distance of the current measurement specified values, e.g., as a maximum respectively minimum differential pressure respectively differential temperature.

2. Apparatus as in Claim 1, characterized in that the form tools (FW11, FW21) are mounted interchangeably in a pair of parallel shields (S1, S2) and each is connected in a rigid installation above the shields through similar types of valve systems (V) with the supply and removal device (VV) and/or in that the temperature transducer (TG), the pressure transducer (PG), an injector (I), and an ejector (AW) are inserted in a rigid installation in the shields and/or in a flexible installation, preferably with tightening nipples (30) in such a way as to be easily interchangeable, through the rear walls (12a, b) of the mold parts into the walls of the mold (11a, b), preferably with springs (41, 71) and non-positively on supporting surfaces (78, 45) at the walls (11a, b) of the mold, and in that the mold parameters for the form tools (FW11, FW21, FW31) themselves and the installation parameters for the supply and removal device (VV) in connection with the installation to the valves (VV) respectively mold wall (11a, b) along with given casting parameters preferably associated with the form tools (FW11, 21, 31) are stored in the memory (Sp).

3. Apparatus as in Caim 1 or 2, characterized in that the supply device (VV) contains a storage device (Si) that is divided into several chambers from which separate feed lines (Z1, Z2) lead, preferably through swelling devices (B1, B2), to the injectors (I1, I2), in that the chambers can contain different plastics (K1, K2), and in that different material data, associated of necessary with each plastic (K1, K2), are stored in the memory (Sp).

4. Apparatus as in one of the foregoing claims, characterized in that the material data are molecular weight, softening temperature, propellant content, powder density, bead size, pourability, and/or relative moisture, in that the mold parameters are pressure and temperature time constants and/or specific media throughputs, in that the installation parameters are pressure and temperature time constants, and in that the casting parameters are: strength, dimensional stability, density, surface quality, and/or moisture content.

5. Apparatus as in Claim 4, characterized in that pressure, temperature, density, moisture and/or level transducers (TG, PG, TG1, PG1, NG, DG) that are connected at the output side to the controls are positioned at the installation connections to the shields (S1, S2) respectively form tools (FW11, FW21) and/or at the installation connections to the supply and device (VV), and in that the associated mold parameters are each determined from the chronological sequence of the difference in values measured between the entry and exit point of a medium through the form tool (FW) and/or the measured value or values of the pressure, temperature, or density transducer (PG, TG, DG) positioned in the wall (11a, b) of the mold, and/or in that each associated installation parameter is always determined from the chronological sequence of the difference in values measured at the output of the supply and removal device (VV) and at the associated connection between the installation and the shields (S1, S2), whereby the chronological sequence over one process cycle is preferably measured using a standardized material and/or without the use of material and/or with a short circuit between the associated supply and removal connections and in that specific media consumptions are measured with flowmeters (D1, D2) at the supply and removal device (VV) in the form of mold parameters and stored in the controls (STV).

6. Apparatus as in Claim 1 or 5, characterized in that the temperature transducers (T, TG, TG1, TGI) are quartz-controlled frequency generators and/or the pressure transducers (P, PG, PG1, PGI) are preferably crystal-controlled frequency generators and/or the density transducers (DG1) are preferably oscillation-circuit controlled frequency generators with an oscillation-circuit field that is coupled, especially capacitatively, with the material channels, the media channels, or the mold cavity (FH1), in that said generators always constitute, preferably in conjunction with frequency counters that constitute call-up memories (ASp), a subassembly, and in that several subassemblies are preferably connected by a call-up and measurement line (46, 76) to the controls (STV) and the controls send call-up signals with an address to the call-up line, each addressed call-up memory always sends the measured and stored measured value via the measurement line, and the controls process the measured value they receive.

7. Apparatus as in one of the foregoing claims, characterized in that a hot-steam line (Da), a coldwater supply-and-return line (Kwz, r), and a removal line (Es) communicate through associated valves of the valves (V) with a chamber (15a, b) in the form tools (11a, b) and a sintering-steam line (Da), a compressed air line (PL), and a vacuum line (Va) communicate through further associated valves of the valves (V) with a media channel (17a, b; 16a, b) and nozzles (20) communicate with the mold cavity (FH1) for the controlled supply of the media to the form tools.

8. Apparatus as in one of the foregoing claims, characterized by swelling devices (B1, B2) positioned between the storage device (Si) for the foamable plastics (K1, 2) and the injectors (I1, 2), with heat in the form of high-frequency or microwave fields and/or by means of hot air or gas being supplied subject to control to the plastic in the swelling device in that a temperature transducer (TGI) and/or a density transducer (DG1, 2) is positioned downstream and/or upstream of the swelling device, and in that the measurement signals from said transducers are supplied to the controls (STV) to control heat supply with control signals (BS) from the controls (STV).

9. Method of manufacturing mouldings from foamable plastics, empolying an apparatus as in one of the foregoing claims, characterized in that minimal values for the given sintering pressure (Psv2) are determined from the molecular weight, powder density, and propellant content and/or for the given sintering temperature (TFv1) of the wall of the mold is determined from the softening temperature and/or the given sintering time (Zsv) is determined from these said material data and from the required strength, dimensional stability, and/or surface quality of the moulding and/or the gap width (Av1) is determined from the powder density and the required density of the casting and its associated mold parameter and/or the given vacuum time (ZVv) is determined from the given moisture content of the casting and the casting parameter of drying and/or the minimal closure temperature (TFv3) and/or the maximal demolding pressure (Psv4) and/or the maximal demolding temperature (TFv2) are determined from the given dimensional stability of the casting and its softening temperature, and/or the pressure (Psv3) at which the vacuum is turned of is determined from the propellant content or the foaming pressure (Ps2) and the associated mold parameter.

10. Method as in Claim 9, characterized in that the heating time (ZH) is determined on the one hand from the given mold-wall temperature (TFv1, TFv2) and the mold parameter for heating and on the other from the form-opening and -closing time, the mold injection time (Zli) and the minimal sintering pressure (Psv2) with the form parameter of pressure decrease and/or the cooling time (ZK) is determined on the one hand from the given vacuum time (ZVv) and the maximal demolding pressure (Psv4) and the form parameter for pressure decrease and on the other from the given mold-wall temperatures (TFv1, TFv2) and the mold parameter for cooling and the given sintering pressure is selected to be high enough over the minimal sintering pressure (Psv2) for this pressure to be achieved at the same point of time that the mold-wall temperature (TFv1) is achieved and/or in that the given value for pressure release (Psv3) or the given vacuum time (ZVv) or compressed-air cooling time is selected so that the demolding pressure (Psv4) is achieved at the same point of time as the demolding temperature (TFv2).

11. Method as in Claim 9 or 10, characterized in that the sintering pressure is prescribed such that sum of the correspondingly constituted times (ZH, Zsv, ZK) is a minimum.

12. Method as in Claim 9 or 10, characterized in that the sintering pressure and the pressure (Psv3) to be prescribed and the temperature (TFv3) to be prescribed or the gap-opening time and the vacuum or compressed-air cooling time are selected such that the sum of the material, media, and operating expenditures per moulding is a minimum.

13. Method as in one of Claims 9 through 12, characterized in that the times for heating, cooling, sintering, vacuum suction, gap opening, or compressed-air cooling are obtained by controlling in accordance with the given values are determined from the chronological sequence of values measured during the process, especially from the mold-wall temperature (TF), the sintering pressure (Ps), the injector pressure (PGI), and/or the signal from the moisture-and-density meter (DG) and new given values are determined from these times in accordance with the method in the foregoing claims and/or in that more precise material data are determined from the measured times and utilized as base data for reemploying the steps of the method in Claims 9 through 12.

14. Method as in one of Claims 9 through 13, characterized in that the maximal demolding temperature (TFv2) is determined from the foaming pressure (Ps2) and/or the maximal pressure (Ps5) subsequent to closing the gap and turning off the vacuum as well as from the mold parameter for dimensional stability and from the softening temperature (TFv2).

15. Method as in one of Claims 9 through 14, characterized in that steps of the method in the foregoing claims are carried out for several, especially differing, form tools operating simultaneously in one apparatus and the maximal cycle time is determined and the given values for operating the form tools at the shortest resulting cycle times are redetermined from the maximal, employing the determined maximal cycle time and in that preferably the renewed determination of the given values occurs with additional variation of the materials, ecpecially with regard to softening temperature, molecular weight, and/or powder density.

16. Method as in Claim 13, characterized in that the measured heating, pressure decrease, and cooling times (ZH, ZK) and if necessary the material data, especially the propellant content, the pourability, and the density determined from them are compared with given limiting values and an alarm triggered whenever the upper or lower limits are exceeded.

17. Method as in one of Claims 9 through 16, characterized in that, in addition to the mold parameters, the installation parameters are utilized to determine the given values and/or the material data.

18. Method as in one of Claims 9 through 17, characterized in that heat is supplied subject to controlled or regulated duration or intensity by means of hot air and/or high frequency or microwave fields to the foamable plastic (K1, K2) before injection into the mold cavity (FH1) in such a way that the plastic dries and/or swells to a given moisture and/or density that is optimal for the subsequent sintering process.

19. Method as in Claim 18, characterized in that the optimal moisture or density is prescribed so that the sum of the expenditures for drying or swelling and for the overall sintering process is minimal.

20. Method as in Claim 18 or 19, characterized in that the sintering pressure (Ps2), the density and/or bead size of the foaming material, the density of the sinter cake or of the casting, and/or casting properties like strength and surface quality are employed as measured control parameters.

21. Apparatus as in one of Claims 1 through 8, especially for carrying out a method as in one of Claims 9 through 20, characterized in that the controls (STV) are a programmed computer in the memory (Sp) of which the material data, the mold parameters, the casting parameters, the installation parameters, and the mutual interconnections and interdependencies of these said data and parameters, especially as asserted in the claims, and optimization method, especially as described in the claims, are stored in the form of tables, and/or programs and the course of the process is controlled by a process-sequence program by controlling the adjusting elements, valves for example, in the apparatus in accordance with the individual measured values by means of continuous comparison with the given values or times determined by the process-sequence program.

22. Method as in Claim 9, characterized in that the sintering pressure is determined from the material data and/or mold parameters by means of a minimal pressure differential and employing the timely distance of the current measurement respectively by means of a time constant of the measured value processing.

Fig.1

Fig.2

Fig.4

Fig.3

Fig.3a

Fig.5a

Fig.5b

Fig.5c

Fig.5d

Fig.5e

Fig.5f